(19) Europäisches Patentamt
European Patent Office
Office européen des brevets

(11) **EP 4 761 386 A1**

(12) **EUROPEAN PATENT APPLICATION**
published in accordance with Art. 153(4) EPC

(43) Date of publication:
**17.06.2026 Bulletin 2026/25**

(21) Application number: **24854309.2**

(22) Date of filing: **08.07.2024**

(51) International Patent Classification (IPC):
*H04W 52/32* (2009.01)     *H04W 52/14* (2009.01)
*H04W 52/28* (2009.01)     *H04W 52/34* (2009.01)
*H04W 64/00* (2009.01)     *H04L 5/00* (2006.01)

(52) Cooperative Patent Classification (CPC):
**H04L 5/00; H04W 52/14; H04W 52/28;
H04W 52/32; H04W 52/34; H04W 64/00**

(86) International application number:
**PCT/KR2024/009654**

(87) International publication number:
**WO 2025/037757 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 KR 20230105265**

(71) Applicant: **LG Electronics Inc.**
**Yeongdeungpo-gu**
**Seoul 07336 (KR)**

(72) Inventors:
• **HWANG, Seunggye**
**Seoul 06772 (KR)**
• **SHIM, Jaenam**
**Seoul 06772 (KR)**
• **KIM, Kijun**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR TRANSMITTING AND RECEIVING SIGNALS IN WIRELESS COMMUNICATION SYSTEM**

(57)     A method for transmitting a signal by a wireless communication device according to at least one of examples disclosed in the present specification may comprise: determining transmission power of each of a plurality of reference signals including a first reference signal and a second reference signal; and transmitting at least one of the plurality of reference signals on the basis of the determined transmission power, wherein bandwidth (BW) aggregation across a plurality of carriers is configured for the first reference signal, and on the basis that the first reference signal at least partially overlaps with the second reference signal in the time domain, transmission power is assigned to the bandwidth-aggregated first reference signal with a priority higher than that of the second reference signal.

**FIG. 14**

## Description

### TECHNICAL FIELD

The present disclosure relates to a wireless communication system, and more particularly, to a method and apparatus for transmitting or receiving uplink/downlink signals.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### Technical Problem

An object of the disclosure is to provide a method and device for transmitting or receiving signals more accurately and efficiently in a wireless communication system.

The object of the disclosure is not limited to this, and other objects may be inferred from the disclosed embodiments.

### Technical Solution

In one aspect, a method of transmitting signals by a wireless communication device may include determining a transmission power for each of a plurality of reference signals including a first reference signal and a second reference signal, and transmitting at least one of the plurality of reference signals based on the determined transmission power, wherein based on that bandwidth (BW) aggregation over a plurality of carriers is configured for the first reference signal, and that the first reference signal at least partially overlaps in a time domain with the second reference signal, a transmission power may be allocated to the BW-aggregated first reference signal is allocated a transmission power with a higher priority than the second reference signal.

In another aspect, a processor-readable recording medium storing instructions for performing the above-described method may be provided.

In another aspect, a wireless communication device may include a memory configured to store instructions, and a processor configured to execute the instructions to perform operations. The operations of the processor may include determining a transmission power for each of a plurality of reference signals including a first reference signal and a second reference signal, and transmitting at least one of the plurality of reference signals based on the determined transmission power, wherein based on that bandwidth (BW) aggregation over a plurality of carriers is configured for the first reference signal, and that the first reference signal at least partially overlaps in a time domain with the second reference signal, a transmission power may be allocated to the BW-aggregated first reference signal is allocated a transmission power with a higher priority than the second reference signal.

Based on a sum of a power required for the first reference signal and a power required for the second reference signal being greater than a maximum transmission power of the wireless communication device, the first reference signal may be allocated the transmission power with the higher priority within a range of the maximum transmission power.

A reduced transmission power may be allocated to the second reference signal.

The plurality of reference signals may further include a third reference signal to which the BW aggregation configured.

Based on the first reference signal at least partially overlapping in the time domain with the third reference signal, a reference signal configured over more carriers between the first reference signal and the third reference signal may be allocated a transmission power with a higher priority.

Based on the first reference signal at least partially overlapping in the time domain with the third reference signal, a reference signal configured over a wider frequency band between the first reference signal and the third reference signal is allocated a transmission power with a higher priority.

Based on that a carrier with a highest priority among the plurality of carriers configured for the first reference signal is higher than a carrier with a highest priority among a plurality of carriers configured for the third reference signal, the first reference signal may be allocated the transmission power with a higher priority than the third reference signal.

The wireless communication device may be a user equipment (UE).

The first reference signal may be a sounding reference signal (SRS) for positioning.

The wireless communication device may be a base station,

The plurality of reference signals may be downlink reference signals.

## Advantageous Effects

According to an embodiment of the present disclosure, a signal can be more accurately and efficiently transmitted or received in a wireless communication system.

The effect of the disclosure is not limited to this, and other advantageous effects may be inferred from the disclosed embodiments.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates an example of setting a positioning protocol.

FIG. 3 illustrates an example of Multi RTT.

FIG. 4 illustrates a positioning architecture of a next-generation (NG) wireless access network (RAN).

FIG. 5 illustrates an example of a location service supported by the NG-RAN.

FIG. 6 illustrates an example of a sensing operation according to one embodiment of the present disclosure.

FIG. 7 illustrates an example of a procedure related to a sensing operation according to one embodiment of the present specification.

FIG. 8 illustrates an example of a proposed UE operation.

FIG. 9 illustrates an example of a proposed base station operation.

FIG. 10 illustrates an example of assigning a high transmission power priority to a BW-agg-SRS-p.

FIG. 11 illustrates another example of a scheduling scenario in which a high transmission power priority is assigned to a BW-agg-SRS-p.

FIG. 12 illustrates an example in which a transmission power priority of a BW-agg-SRS-p is determined based on the number of carriers.

FIG. 13 illustrates an example of determining the transmission power of a BW-agg-SRS-p according to the transmission power priority of a specific carrier.

FIG. 14 illustrates a flow of a signal transmission method of a wireless communication device according to one embodiment.

FIG. 15 illustrates a flexible network topology to which some examples of the present disclosure are applicable.

FIG. 16 shows an example of a communication system 100 applied to the present disclosure.

FIG. 17 illustrates an example of a wireless device applicable to the present disclosure.

## DETAILED DESCRIPTION

In the present specification, "A or B" may mean "only A", "only B", or "both A and B". In other words, "A or B" in the present specification may be interpreted as "A and/or B". For example, in the present specification, "A, B or C" may refer to "only A", "only B", "only C", or "any combination of A, B, and C".

Slash (/) or comma used in the present specification may mean "and/or." For example, "A/B" may mean "A and/or B." Accordingly, "A/B" may mean "only A," "only B," or "both A and B." For example, "A, B, C" may mean "A, B, or C."

In the present specification, "at least one of A and B" may mean "only A," "only B", or "both A and B." In addition, the expression "at least one of A or B" or "at least one of A and/or B" in the present specification may be interpreted the same as "at least one of A and B."

In addition, "at least one of A, B and C" in the present specification may refer to "only A", "only B," or "any combination of A, B and C". In addition, "at least one of A, B or C" or "at least one of A, B and/or C" may mean "at least one of A, B and C."

Moreover, parentheses used in the present disclosure may mean "for example." Specifically, when "control information (ABC)" is described, "ABC" may be given as an example of "control information." For example, "control information" may also include DEF as another example. In other words, "control information" in the present disclosure is not limited to "ABC," which may be described as an example of "control information." Further, when "control information (i.e., ABC)" is described, "ABC" may also be given as an example of "control information."

Further, terms such as "first" and "second" in the present disclosure are used solely to distinguish one component from another and are not used to limit the components. Unless specifically limited, they do not restrict the order or importance of components. Therefore, a first component in one embodiment of the present disclosure may be referred to as a second component in another embodiment, and similarly, a second component in one embodiment may be referred to as a first component in another embodiment.

In the following description, 'when, if, in case of may be replaced with 'based on'.

Technical features described individually in one drawing in the present specification may be implemented individually or simultaneously.

In the present disclosure, a terminal is a user equipment (UE) or a consumer-side device, and may also be referred to as a first node that receives/transmits a signal from/to a base station (BS)/second node/IAB node/transmission-reception point (TRP). The terminal may correspond to a physical node or a logical node. The terminal may correspond to a user-side endpoint or an intermediate point between other endpoints. In communication (including one-to-one, many-to-one, one-to-many, and many-to-many communication) between two points which are not limited to endpoints, the terminal may be a served node. The terminal may be a fixed node or a mobile (unfixed) node in terms of location.

In the present disclosure, a BS is a network-side device and may also be referred to as a second node/IAB node/x-NodeB (where x may be an abbreviation related to radio access technology (RAT))/TRP. The BS may be a physical node or a logical node. The BS may be a network-side endpoint or an intermediate point between other endpoints. In communication (including one-to-one, many-to-one, one-to-many, and many-to-many communication) between two points which are not limited to endpoints, the BS may be a serving node. The BS may be a fixed node or an unfixed node in terms of location.

In the present disclosure, a higher layer parameter may be a parameter that is configured for a UE, pre-configured, or pre-defined. For example, a BS or network may transmit a higher layer parameter to a UE. The higher layer parameter may be transmitted via RRC (Radio Resource Control) signaling or MAC (Medium Access Control) signaling.

In the present disclosure, "configured or defined" may be interpreted as being configured or pre-configured for a device through predefined signaling (e.g., SIB, MAC, RRC) from a BS or network or as being preconfigured for the device. In the present disclosure, "configured or defined" may be interpreted as being preconfigured for the device.

The technologies proposed in the present disclosure may be used in various wireless communication systems such as CDMA (Code Division Multiple Access), FDMA (Frequency Division Multiple Access), TDMA (Time Division Multiple Access), OFDMA (Orthogonal Frequency Division Multiple Access), and SC-FDMA (Single Carrier Frequency Division Multiple Access). CDMA may be implemented as wireless technologies like UTRA (Universal Terrestrial Radio Access) or CDMA2000. TDMA may be implemented as wireless technologies like GSM (Global System for Mobile Communications)/GPRS (General Packet Radio Service)/EDGE (Enhanced Data Rates for GSM Evolution). OFDMA may be implemented as wireless technologies like IEEE (Institute of Electrical and Electronics Engineers) 802.11 (Wi-Fi), IEEE 802.16 (WiMAX), IEEE 802-20, E-UTRA (Evolved UTRA), LTE (Long Term Evolution), and 5G NR.

The technologies proposed in the present disclosure may be implemented as 6G wireless technology and applied to various 6G systems. For example, 6G systems may have key factors such as eMBB (enhanced Mobile Broadband), URLLC (Ultra-Reliable Low Latency Communications), mMTC (massive Machine-Type Communication), AI (Artificial Intelligence) integrated communication, tactile internet, high throughput, high network capacity, high energy efficiency, low backhaul and access network congestion, and enhanced data security.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

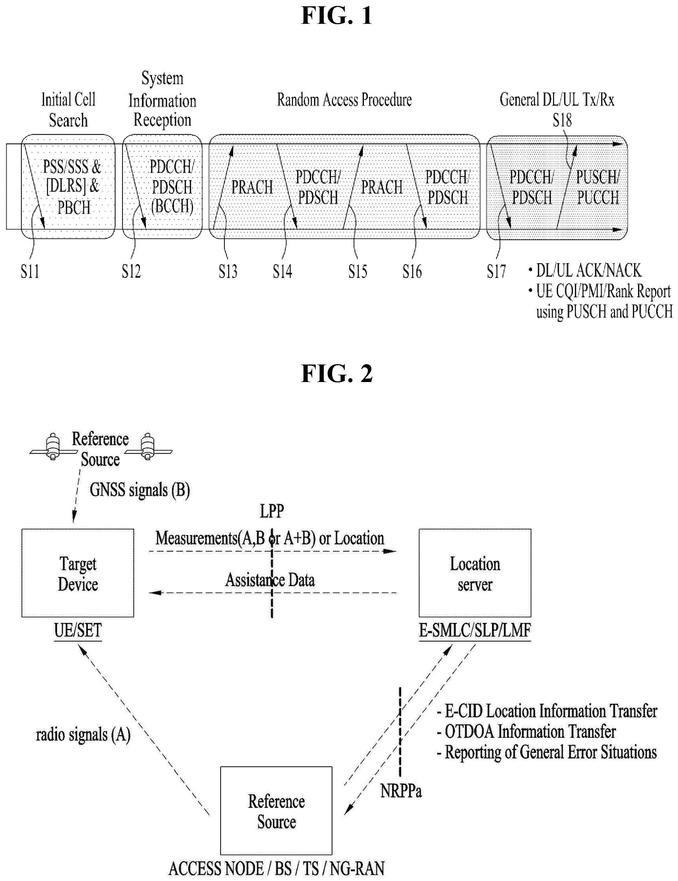

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 2 is a diagram illustrating an exemplary positioning protocol configuration for positioning a UE, to which various embodiments are applicable.

Referring to FIG. 2, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.

- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (observed time difference of arrival)

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA
Here, $T_{ADV}$ may be divided into Type 1 and Type 2 as follows.

$$T_{ADV} \text{ Type 1} = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

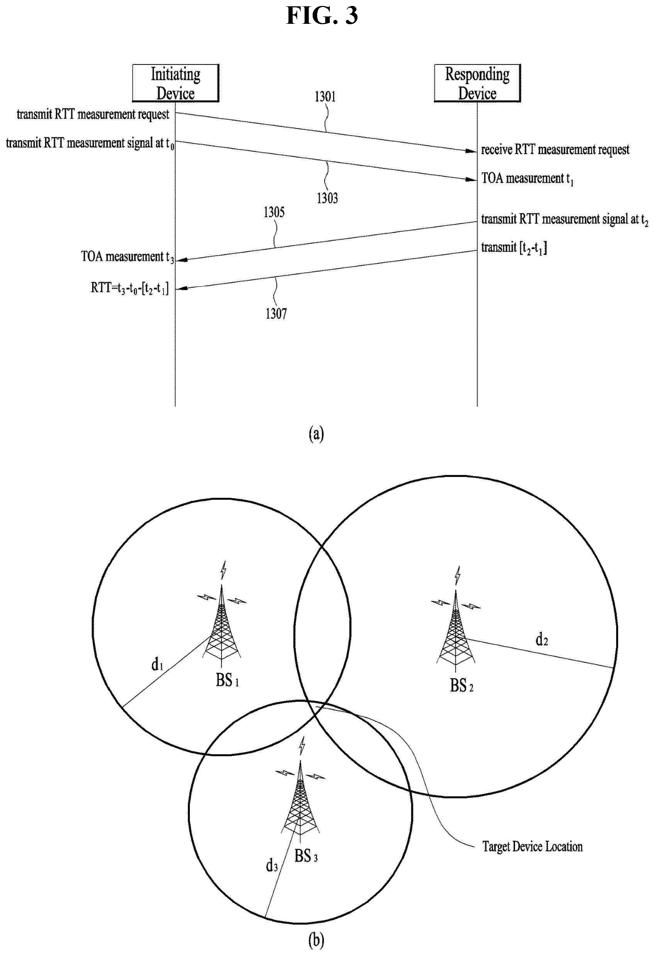

FIG. 3 is a diagram illustrating an exemplary multi-round trip time (multi-RTT) positioning method to which various embodiments are applicable.

Referring to FIG. 3(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement $t_1$ (1303).

The responding device may transmit an RTT measurement signal at $t_2$ and the initiating device may acquire a ToA measurement $t_3$ (1305).

The responding device may transmit information about $[t_2-t_1]$, and the initiating device may receive the information and calculate an RTT (1307). The information may be transmitted and received based on a separate signal or in the RTT measurement signal (1305).

Referring to FIG. 3(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN positioning architecture and procedures

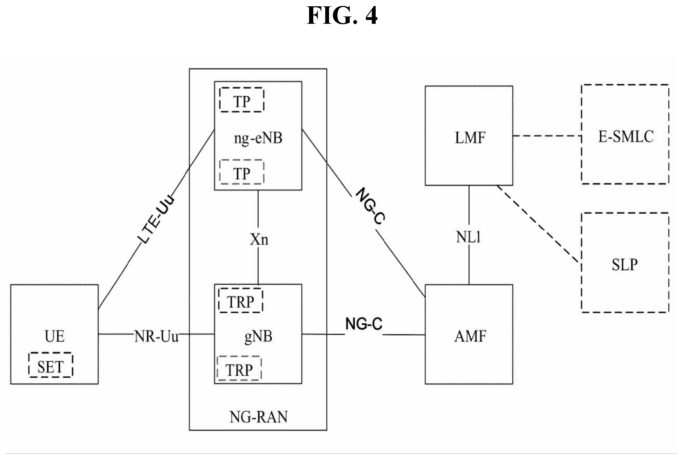

FIG. 4 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

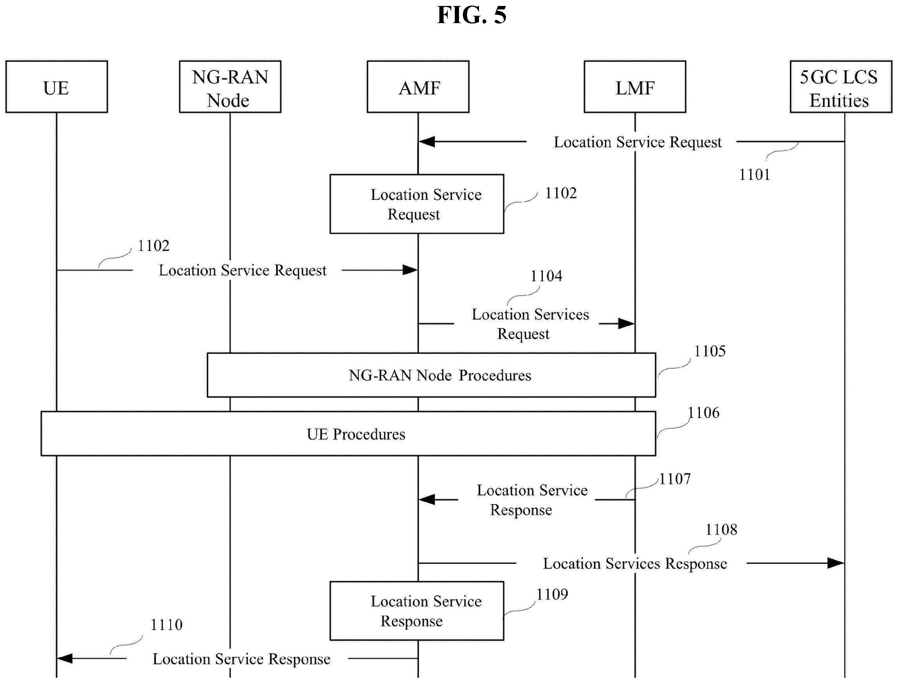

FIG. 5 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 5, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## SRS (Sounding Reference Signal) for Positioning

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

To prevent confusion between the Rel. 15 SRS and SRS for positioning, the SRS for positioning will be referred to as an SRS-p. Unless otherwise specified, the SRS may be interpreted to mean the SRS-p in the newly proposed methods in this specification.

If a higher layer parameter SRS-PosResource is configured for the SRS (i.e., SRS-p) and a higher layer parameter SpatialRelationInfoPos is configured, the ID of a configuration field of a reference RS is provided. The reference RS may be an SRS configured by the higher layer parameter SRS-Resource or SRS-PosResource, a CSI-RS, an SS/PBCH block, a DL PRS of the serving cell, or a DL PRS configured in the SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.

In the RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of operation on the same carrier, if the SRS-p conflicts with a scheduled PUSCH, the SRS-p is dropped on symbols where the collision occurs.

The UE does not expect that SRS-PosResource will be configured on the carrier of the serving cell with a slot format consisting of DL/UL symbols that are not configured for PUSCH/PUCCH transmission.

Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

## Integrated Sensing And Communication (ISAC)

Wireless sensing is a technology enabling information about the environment and/or characteristics of objects within the environment to be obtained by identifying instantaneous linear velocities, angles, distances (ranges) of objects using radio frequencies. Since radio frequency sensing does not require connection to objects via devices within a network, it may provide services for identifying the locations of objects without the need for the devices. The function of obtaining the range, velocity, and angle information from radio-frequency signals may provide a wide range of new functions, such as detection of various objects, object recognition (e.g., vehicles, humans, animals, UAVs), and high-precision positioning, tracking, and activity recognition. Wireless sensing services may provide information to various industries (e.g., unmanned aerial vehicles, smart homes, V2X, factories, railways, public safety, etc.), enabling applications such as intruder detection, assisted vehicle control and navigation, trajectory tracking, collision avoidance, traffic control, and health and mobility management. In some cases, wireless sensing may use non-3GPP-type sensors (e.g., radar, cameras) to additionally support 3GPP-based sensing. For example, the operation of wireless sensing, that is, the sensing operation, may rely on the transmission, reflection, and scattering of wireless sensing signals. Accordingly, wireless sensing may provide an opportunity to enhance existing communication systems from communication networks into wireless communication and sensing networks.

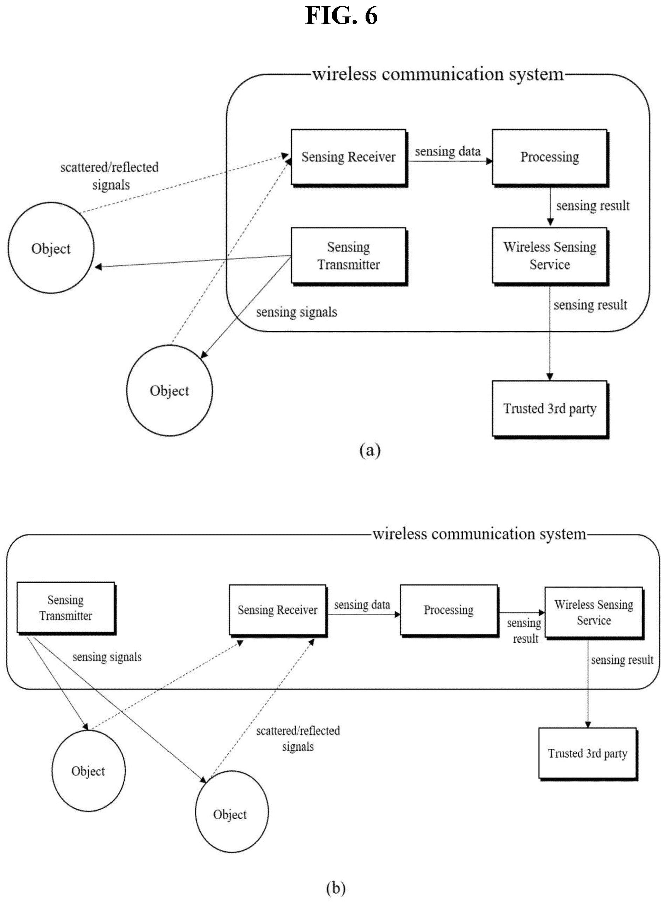

FIG. 6 illustrates an example of a sensing operation according to one embodiment of the present disclosure. The embodiment of FIG. 6 may be combined with various embodiments of the present disclosure. Specifically, FIG. 6(a) illustrates an example of sensing (e.g., monostatic sensing) using a sensing receiver and a sensing transmitter placed at the same location, and FIG. 6(b) illustrates an example of sensing (e.g., bistatic sensing) using a sensing receiver and a sensing transmitter which are separated from each other.

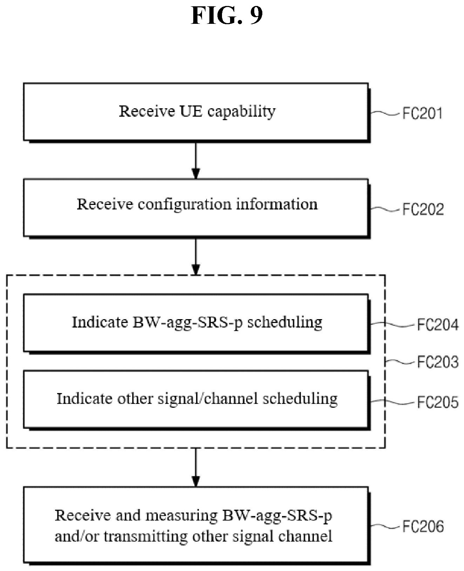

For example, referring to FIG. 9(a), in a 6G network-based wireless communication system according to the present disclosure, the sensing transmitter and sensing receiver may be configured to be included in a single BS (i.e., the same BS) or a single UE (i.e., the same UE). Alternatively, referring to FIG. 9(b), the sensing transmitter and sensing receiver may be included in different BSs, included in different UEs, or included in a UE and a BS, respectively.

In this regard, based on whether each of the sensing transmitter and sensing receiver is included in a BS or a UE, the following six types of sensing modes may be defined.

- Mode 1: A mode in which the sensing transmitter and the sensing receiver are included in a single BS (e.g., a BS-based sensing mode in the monostatic mode)
- Mode 2: A mode in which the sensing transmitter is included in a first BS and the sensing receiver is included in a second BS different from the first BS (e.g., a BS-based sensing mode in the bistatic mode)
- Mode 3: A mode in which the sensing transmitter is included in a BS and the sensing receiver is included in a UE (e.g., a BS-to-UE sensing mode)
- Mode 4: A mode in which the sensing transmitter is included in a UE and the sensing receiver is included in a BS (e.g., a UE-to-BS sensing mode)
- Mode 5: A mode in which the sensing transmitter and the sensing receiver are included in a single UE (e.g., a UE-based sensing mode in the monostatic mode)
- Mode 6: A mode in which the sensing transmitter is included in a first UE and the sensing receiver is included in a second UE different from the first UE (e.g., a UE-based sensing mode in the bistatic mode)

In a 6G network-based wireless communication system according to the present disclosure, one or more of the six sensing modes described above may be used independently or in combination.

Regarding the sensing operation in FIG. 6, the sensing transmitter may transmit a sensing signal for sensing one or more objects (and/or the environment surrounding the objects). For example, the sensing signal may correspond to a radio (frequency) signal defined to be transmittable by a BS/UE in the 6G network-based wireless communication system according to the present disclosure. The sensing receiver may receive a signal scattered/reflected by one or more objects (and/or the environment surrounding the objects) according to the sensing signal transmitted by the sensing transmitter. The sensing receiver may derive sensing data from the scattered/reflected signal, and sensing results may be generated/acquired by processing the sensing data. Here, the sensing results may include characteristic information (e.g., location, distance, velocity, angle, etc.) related to one or more objects (and/or the environment surrounding the objects). The sensing results generated/acquired in this manner may be used for wireless sensing services (e.g., detection or tracking of objects and/or the environment) provided in the 6G network-based wireless communication system according to the present disclosure, or may be provided/disclosed to a trusted third party.

Although the sensing operation in FIG. 6 is described based on a representative example of the operation in the 6G network-based wireless communication system, it may also be extended to cases where UEs/BSs/signals based on earlier generations (e.g., 4G, 5G, etc.) are used.

Additionally, in relation to wireless sensing described in the present disclosure, the time/frequency resources for a sensing operation in the 6G network-based wireless communication system according to the present disclosure and the time/frequency resources for general communication (e.g., UL/DL/sidelink-based communication) may be separately scheduled/configured.

The time/frequency resources for the above-described sensing operation (sensing operations based on FIG. 6) (hereinafter, sensing resources) may be configured/allocated separately from the time/frequency resources for general communication (hereinafter, communication resources).

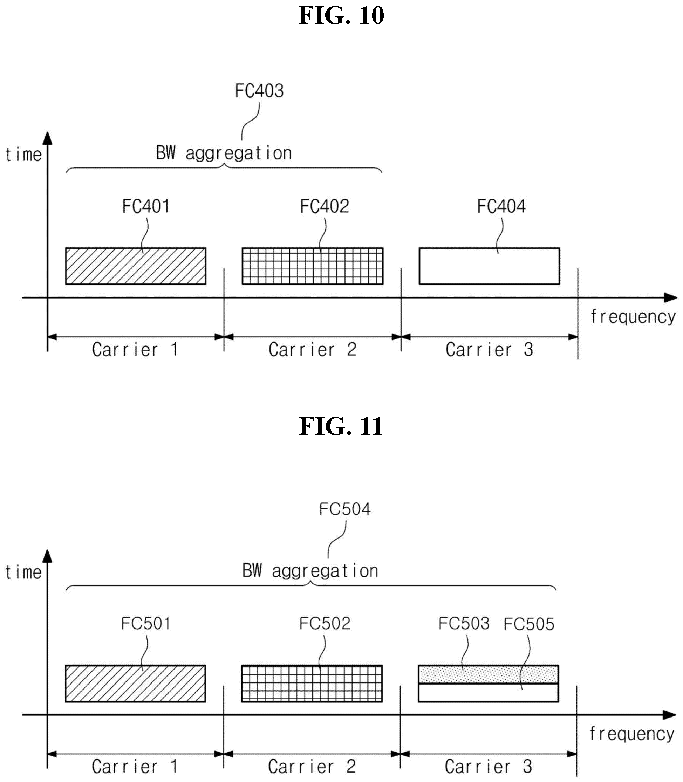

For example, sensing resources may be configured/allocated on a per symbol basis in the time domain and/or on a per resource block basis in the frequency domain. Resources other than those configured/allocated as sensing resources may be used for general communication. That is, from the operational perspective of the BS/UE, sensing resources and communication resources may be configured/allocated based on time-division multiplexing (TDM) and/or frequency-division multiplexing (FDM). Additionally or alternatively, unlike the configuration shown in FIG. 10, sensing resources may also be configured/allocated based on other units in the time domain (e.g., slot, frame, absolute time (ms, $\mu$s)) and/or based on other units in the frequency domain (e.g., subcarrier, carrier, absolute frequency (MHz, GHz)).

Additionally or alternatively, regarding configuration/allocation/scheduling of resources for general communication described in the present disclosure, the relationship between these resources and the sensing resources described above may need to be considered. For example, in configuring/allocating resources for general communication according to embodiment(s) of the present disclosure, the resources may be configured/allocated so as to rate-match or puncture the resource region corresponding to the sensing resources. For example, in scheduling resources for general communication according to embodiment(s) of the present disclosure, the resources may be scheduled so as not to overlap with the resource region corresponding to the sensing resources. When the resources for general communication are configured/allocated/scheduled to overlap with the resource region corresponding to the sensing resources, one of the two operations, or both operations, may be dropped, skipped, or postponed based on priority or a predefined rule. That is, in embodiment(s) of the present disclosure, resources related to general communication (e.g., resources for signals/channels related to UL/DL/sidelink-based data/control) may be configured/allocated/scheduled so as not to overlap with the sensing resources described above.

Additionally, regarding wireless sensing described in the present disclosure, various channel-modeling methods may be applied. Channel modeling related to sensing may refer to configuring a path through which a sensing signal and/or a scattered/reflected signal are transmitted and received, considering an object to be sensed and/or the environment to which the object belong. Channel modeling may be related to the performance/requirements of sensing in a wireless communication system, and therefore it may be an important factor for verification of the feasibility of the sensing function.

Channels related to sensing may be classified into a channel between an object (e.g., a target of interest) and the sensing transmitter/receiver, and a channel between the environment to which the object belongs and the sensing transmitter/receiver. In this regard, channel modeling related to sensing may be classified based on the sensing modes (e.g., the six types described above), object/environment distinction, and/or sensing scenarios. For example, channel modeling for a target in the BS/UE-based monostatic sensing mode, channel modeling for the target in the BS/UE-based bistatic sensing mode, channel modeling for an environment in the BS/UE-based monostatic sensing mode, and channel modeling for an environment in the BS/UE-based bistatic sensing mode may each be optimized differently. For example, various sensing scenarios may be classified into channel modeling for detection, location, and tracking scenarios, channel modeling for motion recognition, and channel modeling for imaging/environment-reconstruction scenarios. Additionally, channel modeling related to sensing may be based on a statistical channel modeling technique and/or a deterministic channel modeling technique. For example, modeling for sensing in a 6G network-based wireless communication system according to the present disclosure may be based on a stochastic-geometry channel modeling technique and/or a hybrid modeling including ray tracing channel modeling technique. Here, the stochastic geometry channel modeling may be based on various statistical characteristics of channel states. Furthermore, the hybrid channel modeling may be based on both the ray tracing technique and the stochastic technique. In the hybrid technique, a channel for an object (e.g., a target of interest) requiring high accuracy and consistency may be modeled using the ray tracing technique, while a channel for an environment may be modeled using the stochastic technique.

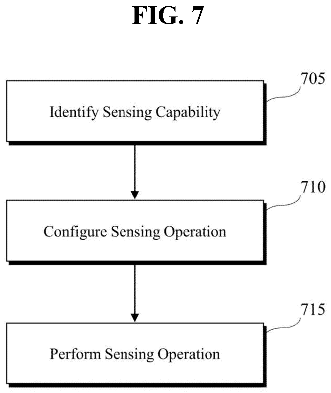

FIG. 7 illustrates an example of a procedure related to a sensing operation according to one embodiment of the present specification. The embodiment of FIG. 7 may be combined with various embodiments disclosed herein.

For example, in a sensing operation involving a UE in the 6G network-based wireless communication system according to the present disclosure, a BS may check the capability of the UE for the sensing operation (705). In this regard, the UE may be configured to report, to the BS, capability information indicating whether it supports the sensing operation. Additionally or alternatively, when the UE is predefined in the specifications to support the sensing operation, the procedure above may be omitted. Furthermore, in the sensing operation involving only the BS, the BS may be configured to report capability information indicating whether it supports the sensing operation to an entity that configures/controls the sensing operation of the BS (e.g., a higher-stage/layer network entity of the BS).

For example, the BS may perform signaling with the UE to exchange configuration information related to the sensing operation (710). For example, the BS may configure/indicate, for the UE, information about the mode of the sensing operation (based on, for example, the six types of modes described above), the entity responsible for the sensing operation (e.g., the sensing transmitter, the sensing receiver), resources for the sensing operation, a target for which the sensing results are intended (e.g., types of wireless sensing services based on the 6G network, a trusted third party), and channel modeling for sensing (e.g., channels between the BS/UE and the object/environment). For example, the BS may receive such information from a higher-stage/layer network entity.

For example, the BS and/or UE may perform the sensing operation based on the configured/indicated information (715). For example, as in FIG. 6, the BS and/or UE may perform a procedure including transmitting a sensing signal, receiving a scattered/reflected signal, deriving sensing data, acquiring sensing results through processing of the sensing data, and providing the sensing results, similarly to the sensing operation of FIG. 6, in the role of the sensing transmitter and/or the sensing receiver. In one example, the sensing results provided through the sensing operation may be utilized in the operations of the BS/UE described in the present disclosure.

## Power Control for BW Aggregated Reference Signal

In a wireless communication system, the size or number of frequency resources used to transmit/receive signals/channels may be adjusted to improve performance. For example, to achieve performance improvement, transmission/reception nodes may perform simultaneous transmission or reception over multiple frequency resources.

In 3GPP NR Rel-18, a bandwidth (BW) aggregation (hereinafter, BW-agg) technique is expected to be introduced. BW-agg may enable simultaneous transmission and reception of multiple reference signals (e.g., PRSs and/or SRSs) over multiple carriers (e.g., DL carrier/UL carrier) in the frequency domain, thereby improving positioning accuracy. Specifically, BW-agg is a method of simultaneously transmitting/receiving PRS and/or SRS resources over different frequency resources (e.g., PFLs for PRS, UL carriers for SRS), while satisfying specific conditions. The specific conditions for BW-agg may include a condition for being positioned within an in-band contiguous carrier, a condition related to resource allocation such as a period and position on the same time axis and an RE mapping pattern on the frequency axis, and a condition for satisfying phase continuity between PRS/SRS resources.

As one implementation example of BW-agg, the transmitter may guarantee phase continuity for different frequency resources subjected to BW-agg. The receiver may treat the different frequency resources with guaranteed phase continuity as a single frequency resource, and apply processing such as FFT/IFFT to enhance resolution of signal detection.

Hereinafter, the BW-agg technique in the NR standard is mainly described. However, the meaning of the term "BW-agg" as used herein is not limited thereto and may refer more generally to any technique that aggregates multiple frequency resources for use in signal/channel transmission.

When a transmission node transmits multiple signals/channels simultaneously at the same point of time, constraints on the maximum transmission power of the transmission node need to be considered. For example, the maximum transmission power of the UE refers to the upper limit of the available transmission power at the time when the UE transmits a specific signal/channel. When multiple signals/channels are transmitted simultaneously over different frequency resources, the transmission power is divided and assigned to the respective signals/channels. In general, the magnitude of the transmission power required to transmit a signal/channel may be determined in consideration of pathloss that occurs in a radio channel between transmission and reception nodes. As the path loss occurring between the transmission and reception nodes increases, required transmission power may increase. The transmission node may determine the transmission power within the range below a maximum transmission power. When multiple frequency resources are used for simultaneous transmission/reception of multiple signals/channels, the sum of transmission powers in the entire frequency domain may be limited by the maximum transmission power of the transmission node. In this case, the transmission power allocated to each frequency resource or signal/channel may be determined based on importance or may be allocated equally. In the 3GPP NR standard, when there are signals and/or channels that the UE transmits simultaneously over multiple UL carriers (e.g., the transmission occasion of a specific signal/channel overlaps with the transmission occasion of another signal/channel), allocating the transmission power is supported based on the predefined or indicated priorities of the respective signals/channels. For example, within the range of limited transmission power, power may first be allocated to the signal/channel with the highest priority.

Similarly, even when transmission/reception of BW-agg-applied signals/channels are introduced, the priorities for allocation of transmission power need to be defined among BW-agg-applied signals/channels or between a BW-agg-applied signal/channel and another signal/channel. For example, when a BW-agg technique for positioning SRS discussed in Rel-18 NR is introduced, priorities for allocation of transmission power need to be determined among SRS resources to which BW-agg is applied, or between BW-agg-applied SRS resources and other signals/channels, and the operation of the UE needs to be determined based thereon. This may be intended to reflect a differentiated operation method in consideration of the characteristics and advantages that BW-agg has compared to transmission forms of other signals/channels (e.g., providing positioning performance with higher resolution and enabling a relative reduction of transmission power per RE according to use of a wider frequency band), and provide a new transmission power control method differentiated from existing schemes in order to improve the efficiency of the intended performance.

In one embodiment of the present disclosure, the operations of a BS and a UE for applying BW aggregation to the transmission/reception of an SRS for positioning (hereinafter, SRS-p), and related signaling methods are described. The embodiment discloses UL positioning mainly focusing on the BW aggregation technique for SRS-p. However, the present disclosure is not limited to SRS-p and may be generally applied to BW aggregation scenarios for other UL signals or DL signals. The methods proposed in the present disclosure may be applied to all types of transmission/reception schemes and positioning techniques expected by a BS and a UE. The proposed methods may also be used for ISAC. In this case, the SRS may be replaced by a sensing signal for ISAC.

The present disclosure may also be applied when BW aggregation is performed for various RSs including SRS-p, or similar operations occur in communication systems such as LTE, NR, and/or 6G. Therefore, the proposed methods may be applied to any kind of wireless communication systems expected by the BS and the UE.

Furthermore, the present disclosure may be applied not only when multiple signals/channels are transmitted/received using multiple frequency resources, but also when a single signal/channel is transmitted/received using multiple frequency resources (e.g., one PRS/SRS resource spans multiple PFL/UL carriers).

Each method proposed in the present disclosure may be operated independently, or one or more methods may be operated in combination. Some terms, symbols, and sequences used for explanation may be replaced with other terms, symbols, or sequences.

In one embodiment, proposed herein are operations of the UE and the BS for BW aggregation of SRS-p transmitted and received through the same antenna under an intra-band contiguous carrier condition, and a signaling method supporting the same.

In one example, the UE may receive a configuration of carriers over which SRS-p is allowed to be transmitted, and SRS-ps configured on each carrier may be grouped to schedule transmission of a BW-agg-applied SRS-p (hereinafter, BW-agg-SRS-p). In this regard, a case is considered where transmission of another signal/channel is scheduled on a transmission occasion (or time resource) on which the BW-agg-SRS-p is scheduled. The transmission of the other signal/channel may include transmission of another BW-agg-SRS-p. The other signal/channel may be scheduled on a carrier different from the carriers on which the BW-agg-SRS-p is transmitted, or may overlap with the BW-agg-SRS-p on some of the carriers on which the BW-agg-SRS-p is transmitted (namely, it may not overlap with transmission of SRS-p on the other carriers). A situation is considered where the BW-agg-SRS-p and another signal/channel share the transmission power of the UE. In the case where the transmission power exceeds the maximum transmission power allowed for transmission by the UE on the given transmission occasion, a priority rule for determining transmission power proposed according to the present disclosure may be applied.

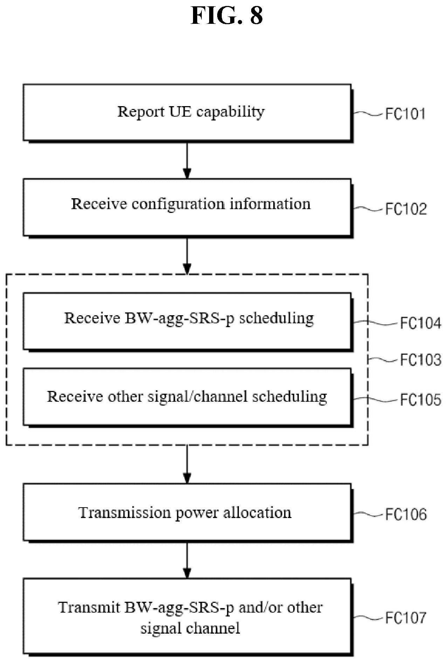

The operations of the UE and BS to which the proposed methods of the present disclosure are applied may follow FIGS. 8 and 9. This is merely an example to which the present disclosure is applied, and the procedure or order may be changed.

FIG. 8 illustrates an example of the proposed UE operation.

Referring to FIG. 8, the UE may report the UE capability thereof for transmission of the BW-agg-SRS-p to the BS (FC101).

The UE may receive configuration information related to UL signals/channels including the BW-agg-SRS-p (FC102). In this case, the configuration information may be transmitted by the BS through a higher-layer signal, such as dedicated RRC signaling or an SIB, and may include information about the UL carriers on which SRS-p resources constituting the BW-agg-SRS-p are transmitted, as well as information about the transmission timing. When the BW-agg-SRS-p or another signal/channel has characteristics of a periodic transmission indicated by a higher-layer signal, the UE may receive information indicating the start of transmission of the BW-agg-SRS-p or the other signal/channel. When transmission of the BW-agg-SRS-p or another signal/channel has characteristics of a semi-persistent transmission (e.g., indication of activation/deactivation by a MAC CE) or characteristics of an aperiodic/dynamic transmission triggered by DCI, the UE may monitor/receive an L1/L2 signal indicating the start of the transmission (FC103). In this case, the reception of signaling indicating the transmission of the BW-agg-SRS-p (FC104) and signaling indicating the transmission of the other signal/channel (FC105) may be performed through the same signaling or different signaling. In the case where the transmission occasion on which the BW-agg-SRS-p is transmitted overlaps with the transmission occasion on which the other signal/channel is transmitted (e.g., there is at least one symbol on which the overlap occurs), the UE may be defined to allocate the transmission power to each of the BW-agg-SRS-p and the other signal/channel according to the proposed method. For example, when the sum of transmission powers required for the respective transmissions is greater than the maximum transmission power of the UE, the priorities of the transmission powers may be determined by applying the method proposed in the present disclosure, and transmission power allocation may be performed based on the determined priorities (FC106). Thereafter, the UE may transmit the BW-agg-SRS-p and the other signal/channel using the determined transmission powers (FC107).

FIG. 9 illustrates an example of the proposed BS operation. The BS may receive the UE capability for transmission of the BW-agg-SRS-p reported by the UE (FC201). Thereafter, the BS may determine/generate configuration information related to UL signals/channels including the BW-agg-SRS-p and may transmit the information to the UE (FC202). The configuration information may be transmitted through higher-layer signaling such as, for example, dedicated RRC signaling or an SIB, and may include information about the UL carriers on which the SRS-p resources constituting the BW-agg-SRS-p are transmitted, and information about the transmission timing. If the BW-agg-SRS-p or other signals/channels have characteristics of periodic transmission (indicated by a higher-layer signal), information When the BW-agg-SRS-p or another signal/channel has characteristics of a periodic transmission (indicated by a higher-layer signal), information indicating the start of transmission of the BW-agg-SRS-p or the other signal/channel may be transmitted. When transmission of the BW-agg-SRS-p or another signal/channel has characteristics of a semi-persistent transmission (e.g., indication of activation/deactivation by a MAC CE) or characteristics of an aperiodic/dynamic transmission triggered by DCI, the BS may transmit an L1/L2 signal indicating the start of the transmission at predetermined time/frequency positions (FC203). In this case, the reception of signaling indicating the transmission of the BW-agg-SRS-p (FC204) and signaling indicating the transmission of the other signal/channel (FC205) may be indicated through the same signaling or different signaling. Thereafter, the BS may receive the BW-agg-SRS-p and the other signal/channel through the time/frequency transmission resources configured therefor, and may perform measurements when necessary (FC206).

## [Proposal 11 Priorities of BW-aggregated SRS and other signals/channels for transmission power reduction

As an example, proposed is a method is proposed to determining the transmission power priority on the transmission occasion of the BW-agg-SRS-p considering the maximum transmission power of the UE. Specifically, Proposal 1 may be applied for transmission power reduction when the total sum of the transmission powers required for the transmissions of the BW-agg-SRS-p and a specific other signal/channel (e.g., transmission powers derived from a combination of the measured pathloss and transmission power-related parameters) is greater than the maximum transmission power of the UE.

Using the proposed method, the conditions for transmission power priority that all SRS-p resources constituting the BW-agg-SRS-p have over other signals/channels may be determined/configured. For example, when the BW-agg-SRS-p has a higher transmission power priority than a specific signal/channel, all SRS-p resources constituting the BW-agg-SRS-p may be determined/configured to have a higher transmission power priority than the specific signal/channel. Conversely, when the BW-agg-SRS-p has a lower transmission power priority than the specific signal/channel, all SRS-p resources constituting the BW-agg-SRS-p may be determined/configured to have a lower transmission power priority than the specific signal/channel. For the priorities of the SRS-p resources constituting the BW-agg-SRS-p, a predetermined method (e.g., the same transmission power priority) may be applied, but the present disclosure is not limited thereto.

As an example, the transmission power priorities of the BW-agg-SRS-p and other signals/channels may be separately determined depending on the target signal/channel. The following options may be applied to determine the priorities according to each situation. The options may be operate individually or one or more of the options may be applied in combination.

### Option 1-1) Assigning higher transmission power priority to BW-agg-SRS-p

The method proposed in the present disclosure may include a method that defines the transmission of the BW-agg-SRS-p to have higher transmission power priority than another signal/channel. For example, the "other signal/-channel" may be an SRS or SRS-p to which BW aggregation is not applied. When the distance between the UE and the BS needs to be measured through the transmission and reception of SRS-p or SRS (e.g., for the purpose of positioning), higher transmission power priority may be assigned to the BW-agg-SRS-p transmitted and received using more carriers, thereby reliably obtaining high accuracy.

As an example applied in the 3GPP NR standard, SRS-p resources satisfying specific conditions for BW-agg (e.g., intra-band contiguous carriers, same periodicity and offset, same spatial relation) may be configured for the BW-agg-SRS-p, and SRS-p (or SRS) resources may be scheduled for transmission on other UL carriers on which the BW-agg-SRS-p is not transmitted. When the transmission occasion of the BW-agg-SRS-p overlaps with that of the SRS-p resource in the time domain, requiring the UE to perform simultaneous transmission at positions of all or some symbol(s), and the total sum of transmission powers required at the positions of the symbol(s) is greater than the maximum transmission power of the UE, Option 1-1 may be applied such that the BW-agg-SRS-p is assigned higher transmission power priority. However, if there is another method for determination of transmission power priorities that should be considered prior to the method proposed in Option 1-1, and the priority can be determined by the other method, the other method may be used.

FIG. 10 illustrates an example of a scheduling situation where a higher transmission power priority is assigned to the BW-agg-SRS-p. In FIG. 10, BW-agg is configured for SRS-p resources (FC401) configured on Carrier 1 and SRS-p resources (FC402) configured on Carrier 2, such that transmission of the BW-agg-SRS-p (FC403) is scheduled. It is assumed that the transmission of SRS-p resources configured on Carrier 3 (FC404) is also scheduled on the transmission occasion of the BW-agg-SRS-p (FC403). In this case, if a specific condition for transmission power priorities that is considered prior to Option 1-1 is configured, but the transmission power priorities of the BW-agg-SRS-p (FC403) and the SRS-p resource (FC404) cannot be determined by the specific condition (e.g., the specific priority condition does not define the priorities of the BW-agg-SRS-p (FC403) and the SRS-p resource (FC404), or the same priority is assigned thereto under the specific transmission power priority condition), the UE may determine the transmission power priorities according to the method proposed in Option 1-1. In the case of FIG. 10, the BW-agg-SRS-p (FC403) may be assigned higher transmission power priority than the SRS-p resource (FC404).

As an example applied in the 3GPP NR standard, SRS-p resources satisfying specific conditions for BW-agg (e.g., intra-band contiguous carriers, same periodicity and offset, same spatial relation) may be configured for a BW-agg-SRS-p, and an SRS-p (or SRS) resource may be scheduled to be transmitted at some positions of the UL carrier through which the BW-agg-SRS-p is transmitted. In this case, when the transmission occasions of the BW-agg-SRS-p and the SRS-p resource overlap with each other, requiring the UE to perform simultaneous transmission at positions of all or some symbol(s), and the total sume of transmission powers required at the positions of the symbol(s) is greater than the maximum transmission power of the UE, Option 1-1 may be applied to assign higher transmission power priority to transmission of the BW-agg-SRS-p. However, if there is another method for determination of transmission power priorities that should be considered prior to the method proposed in Option 1-1, and the priorities are predetermined by the other method, the other method may be used.

FIG. 11 illustrates another example of a scheduling situation where higher transmission power priority is assigned to the BW-agg-SRS-p. In FIG. 11, BW agg is configured for SRS-p resources configured on Carrier 1 (FC501), SRS-p resources configured on Carrier 2 (FC502), and SRS-p resources configured on Carrier 3 (FC503), such that transmission of the BW-agg-SRS-p (FC504) is scheduled. On some symbols for the transmission occasion of the BW-agg-SRS-p, the transmission of the SRS-p resources configured on Carrier 3 (FC505) is also scheduled. The SRS-p resources (FC505) to which BW-agg configured for Carrier 3 is not applied have a higher transmission priority (e.g., transmission priority set/defined separately from power priority) than the SRS-p resources (FC503) configured for the BW-agg-SRS-p. Accordingly, at the overlapping symbol positions, the SRS-p resources (FC503) configured for the BW-agg-SRS-p may be dropped, and the SRS-p resources (FC505) to which BW-agg is not applied may be transmitted. There may be a condition for transmission power priority that is considered before Option 1-1. If the transmission power priorities of the BW-agg-SRS-p (FC504) and the SRS-p resources (FC505) still cannot be determined even based on the transmission power priority condition that is considered before Option 1-1, the UE may determine the priorities according to the method proposed in Option 1-1. In the example of FIG. 11, the BW-agg-SRS-p (FC504) (i.e., the BW-agg-SRS-p composed of FC501 and FC502) may be assigned higher transmission power priority than the SRS-p resources (FC505).

According to Option 1-1, by assigning a higher priority to the transmission power of BW-agg-SRS-p, the UE may prioritize SRS-p transmissions that are more suitable for improving positioning accuracy without causing separate signaling overhead.

Option 1-2) Assigning a higher transmission power priority to a BW-agg-SRS-p configured with a larger number of carriers

The method proposed in the present disclosure may include a method that defines a BW-agg-SRS-p composed of a larger number of carriers to have higher transmission power priority. When the distance between the UE and the BS is to be measured through the transmission and reception of SRS-p or SRS (e.g., for the purpose of positioning), higher transmission power priority may be assigned to the BW-agg-SRS-p transmitted and received using more carriers, thereby reliably obtaining high accuracy.

As an example applied in the 3GPP NR standard, SRS-p resources satisfying specific conditions for BW-agg (e.g., intra-band contiguous carriers, same periodicity and offset, same spatial relation) may be configured for one BW-agg-SRS-p on M UL carriers (hereinafter BW-agg-SRS-p#M), and SRS-p resources satisfying specific conditions for BW-agg may be configured for another BW-agg-SRS-p on N UL carriers different from the M BW-agg-SRS-p (hereinafter BW-agg-SRS-p#N) to schedule transmission. In this case, when M > N, the transmission occasions of BW-agg-SRS-p#M and BW-agg-SRS-p#N overlap with each other, requiring the UE perform simultaneous transmission at positions of all or some symbol(s), and the total sum of transmission powers required at the positions of the symbol(s) is greater than the maximum transmission power of the UE, Option 1-2 may be applied to assign higher transmission power priority to transmission of BW-agg-SRS-p#M. However, if there is another method for determination of transmission power priorities that should be considered prior to the method proposed in Option 1-2, and the priorities are predetermined by the other method, the other method may be used.

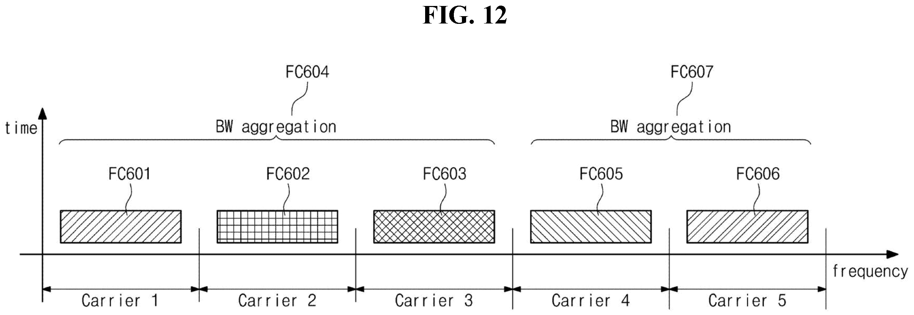

FIG. 12 illustrates an example in which the transmission power priority of the BW-agg-SRS-p is determined based on the number of carriers. FIG. 12 illustrates a situation in which BW-agg is configured for SRS-p resources (FC601, FC602, FC603) configured on Carrier 1 to Carrier 3 to schedule transmission of a BW-agg-SRS-p (FC604) spans 3 UL carriers, and BW-agg is also configured for SRS-p resources (FC605, FC606) configured on Carriers 4 and 5 to schedule transmission of a BW-agg-SRS-p (FC607) that spans 2 UL carriers. When the transmission occasion of the BW-agg-SRS-p (FC604) spanning the 3 UL carriers overlaps with the transmission occasion of the BW-agg-SRS-p spanning the 2 UL carriers (FC607), the UE may determine the transmission power allocated to each SRS-p resource by taking transmission power priorities into account. If condition(s) for transmission power priorities that is considered prior to Option 1-2 are configured/defined, but the transmission power priorities of the BW-agg-SRS-p (FC604) spanning the 3 UL carriers and the BW-agg-SRS-p (FC607) spanning the 2 UL carriers cannot be determined by the condition(s), the UE may determine the transmission power priorities according to the method proposed in Option 1-2. In FIG. 12, the BW-agg-SRS-p (FC604) spanning the 3 carriers may be assigned a higher transmission power priority.

According to Option 1-2, when transmission power priorities need to be determined for different BW-agg-SRS-ps, the UE may prioritize SRS-p transmissions that are more suitable for improving positioning accuracy without causing separate signaling overhead.

Option 1-2-a) Assigning a higher transmission power priority to a BW-agg-SRS-p configured with a larger BW

The transmission power priority determination method based on the number of UL carriers in Option 1-2 may be replaced with a method based on the total bandwidth spanned by transmission of a BW-agg-SRS-p. As an example, two BW-agg-SRS-ps whose transmission occasions overlap with each other may be configured, where the total BW over which one of the BW-agg-SRS-ps, BW-agg-SRS-p#P, is transmitted is P, and the total BW over which the other, BW-agg-SRS-p#Q, is transmitted is Q. In this case, when P > Q, the transmission occasions of BW-agg-SRS-p#P and BW-agg-SRS-p#Q overlap with each other, requiring the UE perform simultaneous transmission at positions of all or some symbol(s), and the total sum of transmission powers required at the positions of the symbol(s) is greater than the maximum transmission power of the UE, Option 1-2-a may be applied to assign higher transmission power priority to transmission of BW-agg-SRS-p#P. However, if there is another method for determination of transmission power priorities that should be considered prior to the method proposed in Option 1-2-a, and the priorities are predetermined by the other method, the other method may be used.

The method proposed in Option 1-2-a may also be used when determining transmission power priorities of different BW-agg-SRS-ps configured with the same number of UL carriers. It may replace Option 1-2 or may serve as a follow-up method applied when transmission power priorities cannot be determined with the method of Option 1-2 (e.g., the number of UL carriers used to configure the BW-agg-SRS-ps are the same).

Option 1-3) Determining the transmission power priority of a BW-agg-SRS-p based on the transmission power priority of a specific UL carrier among the UL carriers used to configure BW-agg-SRS-ps

The present disclosure proposes a method in which the transmission power priority of a BW-agg-SRS-p is determined according to the transmission power priority of a specific UL carrier among the UL carriers used in configuring BW-agg-SRS-ps. As an example, the specific UL carrier may be the UL carrier with the highest transmission power priority among the UL carriers used to configure BW-agg-SRS-ps.

For example, the transmission power priority assigned to the UL carrier may be determined based on the following sub-options. When one or more sub-options are considered, there is an order of application of the sub-options, and a UL carrier that includes a sub-option with a higher precedence may be determined to have a higher transmission power priority.

(i) Sub-Option 1-3-1: higher priority may be assigned to an SRS-p resource configured on the primary cell, which may be the PCell of the MCG or the PSCell of the SCG. Specifically, when an SRS-p resource configured on the primary cell is included among the SRS-p resources configured for the BW-agg-SRS-p, the BW-agg-SRS-p may be assigned higher priority than the other BW-agg-SRS-ps without such a resource.

(ii) Sub-Option 1-3-2: higher priority may be assigned to a UL carrier on which PUCCH transmission is configured. Specifically, when the UL carrier on which PUCCH transmission is configured is included among the SRS-p resources configured for a specific BW-agg-SRS-p, and PUCCH transmission is not configured on any SRS-p resources configured for the other BW-agg-SRS-ps, the UE may assign higher priority to the specific BW-agg-SRS-p including the UL carrier on which PUCCH transmission is configured. In a variation of Sub-option 1-3-2, the number of UL carriers on which PUCCH transmission is configured among the UL carriers configured for a BW-agg-SRS-p may be compared with that for the other BW-agg-SRS-ps, and higher priority may be assigned to transmission of the BW-agg-SRS-p with more UL carriers.

(iii) Sub-Option 1-3-3: higher priority may be assigned to a non-supplementary UL carrier. Specifically, Sub-Option 1-3-3 may be considered as a method applied when none of the BW-agg-SRS-ps subjected to determination of transmission power priorities includes a UL carrier on which PUCCH transmission is configured. In one example, a BW-agg-SRS-p configuration that does not include any supplementary UL carrier among the SRS-p resources configured for a specific BW-agg-SRS-p may be assigned higher priority than a BW-agg-SRS-p configuration that includes a supplementary UL carrier. In another example, a BW-agg-SRS-p transmission including more non-supplementary UL carriers among the SRS-p resources configured for the specific BW-agg-SRS-p may be assigned higher priority than the other BW-agg-SRS-p configuration, or a BW-agg-SRS-p transmission including fewer supplementary UL carriers may be assigned higher priority than the other BW-agg-SRS-p configuration.

As an example applied in the 3GPP NR standard, SRS-p resources satisfying specific conditions for BW-agg (e.g., intra-band contiguous carriers, same periodicity and offset, same spatial relation) may be configured for a BW-agg-SRS-p, and another BW-agg-SRS-p may be configured at at positions of all or some symbol(s) of the transmission occasion of the BW-agg-SRS-p, requiring the UE to perform simultaneous transmission. In this case, when the total sum of transmission powers required at the positions of the symbol(s) is greater than the maximum transmission power of the UE, transmission of the BW-agg-SRS-p selected based on the methods proposed in Option 1-3 may be assigned a higher transmission power priority. However, if there is another method for determination of transmission power priorities that should be considered prior to the method proposed in Option 1-3, and the priorities are predetermined by the other method, the other method may be used.

The methods proposed in Option 1-3 may also be used to determine transmission power priorities of at least one BW-agg-SRS-p and other SRS-p resources (or SRS resources). As an example applied in the 3GPP NR standard, SRS-p resources satisfying specific conditions for BW-agg (e.g., intra-band contiguous carriers, same periodicity and offset, same spatial relation) may be configured for the BW-agg-SRS-p, and other SRS-p resources (SRS resources) may be configured at positions of all or some symbol(s) of the transmission occasion of the BW-agg-SRS-p, requiring the UE to perform simultaneous transmission. In this case, when the total sum of transmission powers required at the positions of the symbol(s) is greater than the maximum transmission power of the UE, transmission of the BW-agg-SRS-p selected based on the methods proposed in Option 1-3 may be assigned a higher transmission power priority. In this case, the conditions applied to the SRS-p resources (or SRS-resources) may depend on whether the UL carrier used to transmit the SRS-p resources (or SRS-resources) satisfies the priority condition for UL carriers considered in Option 1-3. However, if there is another method for determination of transmission power priorities that should be considered prior to the method proposed in Option 1-3, and the priorities are predetermined by the other method, the other method may be used.

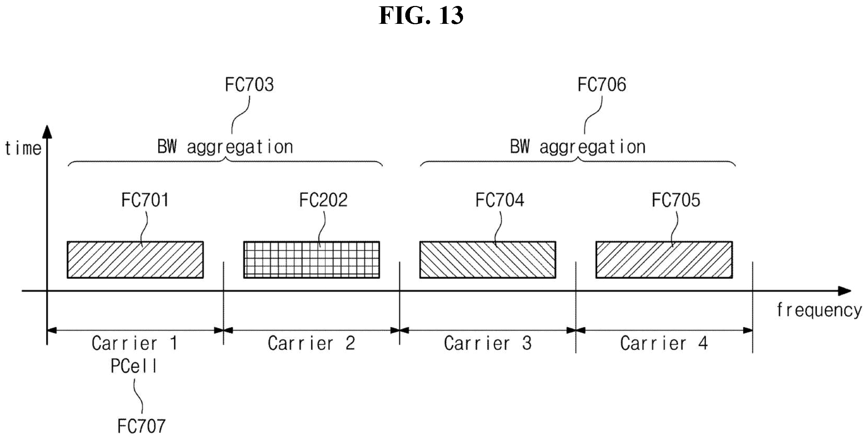

FIG. 13 illustrates an example of determining the transmission power of a BW-agg-SRS-p according to the transmission power priority of a specific carrier. In the example of FIG. 13, BW aggregation is configured for SRS-p resources (FC701) configured on Carrier 1 and SRS-p resources (FC702) configured on Carrier 2, such that transmission of one BW-agg-SRS-p (FC703) is scheduled. In addition, BW aggregation is configured for SRS-p resources (FC704) configured on Carrier 3 and SRS-p resources (FC705) configured on Carrier 4, such that transmission of another BW-agg-SRS-p (FC706) is scheduled. When the transmission occasions of the two BW-agg-SRS-ps overlap with each other, the UE may determine the magnitude of transmission power allocated to each SRS-p resource, considering the priorities of transmission powers. If conditions for transmission power priorities that is considered prior to Option 1-3 are configured/defined, but the transmission power priorities cannot be determined by the conditions, the UE may determine the transmission power priorities according to the method proposed in Option 1-3. In FIG. 13, it is assumed that Carrier 1 is the PCell, and the BW-agg-SRS-p including Carrier 1 has a higher priority than the other BW-agg-SRS-p.

According to the method proposed in Options 1-3, the UE may be allowed to assign priorities of transmission powers based on the usage purpose or configuration state of multiple UL carriers available to the UE, without generating separate signaling overhead.

Option 1-4) Assigning transmission power priority based on a priority indicator

In the method proposed in the present disclosure, the configuration information related to a BW-agg-SRS-p may include information of a priority indicator for determining transmission power priority, and the transmission power priority may be set according to the information provided by the priority indicator. For example, the priority indicator may be included in the configuration information related to the BW-agg-SRS-p or in the configuration information related to the SRS-p resources configured for the BW-agg-SRS-p, and may be configured by the BS and provided to the UE. For example, one or more levels may be defined for the priority indicator. In the case where multiple levels are defined, the transmission power priority may be determined according to the ascending (or descending) order of the values represented by the priority indicator.

As an example applied in the 3GPP NR standard, SRS-p resources satisfying specific conditions for BW-agg (e.g., intra-band contiguous carriers, same periodicity and offset, same spatial relation) may be configured for a BW-agg-SRS-p, the information indicating the BW-agg operation may include a priority indicator (hereinafter, PI-A), and another BW-agg-SRS-p may be configured along with another priority indicator (hereinafter, PI-B) at positions of all or some symbol(s) of the transmission occasion of the BW-agg-SRS-p, requiring the UE to perform simultaneous transmission. In addition, the sum of the transmission powers required at the positions of the symbol(s) may be greater than the maximum transmission power of the UE. In this case, when the priority of PI-A is higher than the priority of PI-B, the method proposed in Option 1-4 may be applied such that the BW-agg-SRS-p corresponding to the PI-A may be assigned higher transmission power priority. However, if there is another method for determination of transmission power priorities that should be considered prior to the method proposed in Option 1-4, and the priorities are predetermined by the other method, the other method may be used.

As another example applied in the 3GPP NR standard, SRS-p resources satisfying specific conditions for BW-agg (e.g., intra-band contiguous carriers, same periodicity and offset, same spatial relation) may be configured for a BW-agg-SRS-p, and a priority indicator (hereinafter, PI-C) is included in the configuration information related to a specific SRS-p resource (or UL carrier) configured for the BW-agg-SRS-p, and another BW-agg-SRS-p may be configured along with another priority indicator (hereinafter, PI-D), which may be included in the configuration information related to the specific SRS-p resource (or UL carrier), at positions of all or some symbol(s) of the transmission occasion of the BW-agg-SRS-p, requiring the UE to perform simultaneous transmission. In addition, the sum of the transmission powers required at the positions of the symbol(s) may be greater than the maximum transmission power of the UE. In this case, when the priority of the PI-C is higher than the priority of the PI-D, the method proposed in Option 1-4 may be applied such that the BW-agg-SRS-p corresponding to the PI-C may be assigned higher transmission power priority. In such a case, when multiple SRS-p resources configured for one BW-agg-SRS-p include multiple SRS-p resources for which a different priority indicator is configured, the priority indicator having the highest priority (or lowest-priority) may be determined as the priority indicator corresponding to the BW-agg-SRS-p. However, if there is another method for determination of transmission power priorities that should be considered prior to the method proposed in Option 1-4, and the priorities are predetermined by the other method, the other method may be used.

The method proposed in Option 1-4 allows the BS to control UE operations by configuring the transmission power priorities.

**[Proposal 2] Order of applying multiple transmission power-reduction rules**

The condition for determining the transmission power priority for the purpose of transmission power reduction considering BW-aggregated SRS may include multiple conditions because of relations to and characteristics of various signals/channels. Moreover, when there is a transmission power priority determination method used for conventional UEs that do not support BW aggregation, a condition for using in combination or applying the existing method and the new methods may need to be considered. When multiple conditions are supported/configured to determine transmission power priority, ambiguity may arise in the operations of the BS and the UE if the results of determination of the transmission power priority obtained under the respective conditions differ from each other. In this regard, Proposal 2 describes the order of applying the proposed methods when the method of determining power transmission priority in consideration of BW-agg-SRS-p in Proposal 1 is introduced. Proposal 2 also proposes the application order of the existing transmission power priority determination method and the transmission power priority determination method proposed in the present disclosure in consideration of the case where the existing method and the proposed method are applied together.

According to the proposed method, priorities are determined sequentially based on the order in which the transmission power priority determination methods are listed. If the transmission power priorities of all signals/channels are determined according to a transmission power priority determination method that is considered earlier in order, the transmission power priority determination procedure may be terminated, and the determined priorities may be may be applied. If there are remaining signals/channels having the same priority, a subsequent transmission power priority determination method in the order may be applied.

As a specific method, based on the 3GPP NR standard, the conditions for determining transmission power priorities described below may be applied sequentially. When the priorities are not determined even after applying all the following conditions, additional conditions for determination of transmission power priorities may be considered.

1) PRACH transmission on the PCell
2) PUCCH or PUSCH transmission with a higher priority index
3) PUCCH or PUSCH transmission with the same priority index

i) PUCCH transmission including HARQ-ACK, SR, and/or LRR, or PUSCH transmission including HARQ-ACK with the corresponding priority index
ii) PUCCH transmission including CSI or PUSCH transmission including CSI
iii) PUSCH transmission not including HARQ-ACK or CSI of the corresponding priority index, and PUSCH transmission on the PCell in a type 2 random access procedure

4) Aperiodic SRS transmission with higher priority than semi-persistent and/or periodic SRS, or PRACH transmission on a serving cell other than the PCell

If there are signals/channels for which the transmission power priorities have not been determined even after completing the sequence from 1) to 4), particularly if it is necessary to determine the transmission power priority for BW-agg-SRS-p, specific methods for defining additional transmission power priority conditions and the application order thereof may be considered, as in the following embodiments.

(Embodiment 2-1)

5) SRS-p resources belonging to BW-agg-SRS-p

- i) SRS-p resources belonging to BW-agg-SRS-p configured with more UL carriers
- ii) BW-agg-SRS-p including SRS-p resources on UL carriers with higher transmission power priority

In Embodiment 2-1, the conditions are applied in the following order. The presence of BW-agg-SRS-p configuration is first determined (i.e., Option 1-1 in Proposal 1). When it is necessary to determine the transmission power priorities of multiple BW-agg-SRS-ps the BW-agg operation configured with a larger number of UL carriers is used as a reference (i.e., Option 1-2 in Proposal 1). When there are multiple BW-agg-SRS-ps configured with the same number of UL carriers, the transmission power priorities are determined based on the UL carriers on which the BW-agg-SRS-ps are configured (i.e., Option 1-3 in Proposal 1). The method in this embodiment may contribute to improving positioning accuracy by prioritizing a BW-agg-SRS-p that uses a wider BW.

(Embodiment 2-2)

5) SRS-p resources belonging to a BW-agg-SRS-p

- i) SRS-p resources belonging to a BW-agg-SRS-p corresponding to a higher priority indicator
- ii) SRS-p resources belonging to a BW-agg-SRS-p configured with more UL carriers
- iii) A BW-agg-SRS-p including SRS-p resources on UL carriers with higher transmission power priority

In Embodiment 2-2, the conditions are applied in the following order. The presence of BW-agg-SRS-p is first determined (i.e., Option 1-1 in Proposal 1). When it is necessary to determine the transmission power priorities of multiple BW-agg-SRS-ps, a priority indicator configured by the BS and received and operated by the UE is preferentially used (i.e., Option 1-4 in Proposal 1). When it is necessary to determine the transmission power priorities of different BW-agg-SRS-ps with the same priority indicator index, the BW-agg operation configured with more UL carriers is used as a reference (i.e., Option 1-2 in Proposal 1). Subsequently, if needed, the transmission power priority is determined based on the UL carriers on which the BW-agg-SRS-p is configured (i.e., Option 1-3 in Proposal 1). This embodiment may prioritize the transmission power of BW-agg-SRS-p to aim for high positioning accuracy, while also allowing the BS to control the transmission power priorities of BW-agg-SRS-ps.

(Embodiment 2-3)

5) SRS-p resources corresponding to a higher priority indicator, or SRS-p resources belonging to a BW-agg-SRS-p
6) SRS-p resources belonging to aa BW-agg-SRS-p

i) SRS-p resources belonging to a BW-agg-SRS-p configured with more UL carriers
ii) BW-agg-SRS-p including SRS-p resources on UL carriers with higher transmission power priority

In Embodiment 2-3, regardless of whether BW-agg is applied, the conditions are applied in the following order. A priority indicator configured by the BS and received and operated by the UE is preferentially used (i.e., Proposal 1, Option 1-4). When there are a BW-agg-SRS-p and SRS-p (or SRS) resources that have the same priority indicator index, the priorities thereof is determined based on whether BW-agg is applied (i.e., Option 1-1 of Proposal 1). When it is necessary to determine the transmission power priorities of different BW-agg-SRS-ps with the same priority indicator index, the BW-agg operation configured with more UL carriers is used as a reference (i.e., Option 1-2 in Proposal 1). Subsequently, if needed, the transmission power priority is determined based on the UL carriers on which the BW-agg-SRS-p is configured (i.e., Option 1-3 in Proposal 1).
This embodiment may allow the BS to configure and indicate priorities of SRS before considering BW-agg, increasing the flexibility of the BS. If priorities are not configured, a BW-agg-SRS-p using a wider BS may be prioritized to support positioning accuracy improvement as a default operation.

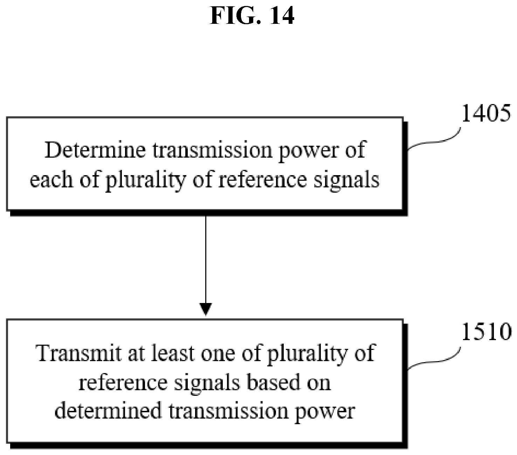

FIG. 14 illustrates a flow of a signal transmission method of a wireless communication device according to one embodiment.

Referring to FIG. 14, the wireless communication device may determine the transmission power for each of a plurality of reference signals, including a first reference signal and a second reference signal (1505).

The wireless communication device may transmit at least one of the plurality of reference signals based on the determined transmission powers (1510).

Based on that bandwidth (BW) aggregation over a plurality of carriers is configured for the first reference signal, and that the first reference signal at least partially overlaps in a time domain with the second reference signal, a transmission power may be allocated to the BW-aggregated first reference signal is allocated a transmission power with a higher priority than the second reference signal.

Based on a sum of a power required for the first reference signal and a power required for the second reference signal being greater than a maximum transmission power of the wireless communication device, the first reference signal may be allocated the transmission power with the higher priority within a range of the maximum transmission power.

Reduced transmission power may be allocated to the second reference signal.

The plurality of reference signals may further include a third reference signal for which bandwidth aggregation is configured.

For example, based on the first reference signal at least partially overlapping in the time domain with the third reference signal, a reference signal configured over more carriers between the first reference signal and the third reference signal may be allocated a transmission power with a higher priority.

For example, the first reference signal at least partially overlapping in the time domain with the third reference signal, a reference signal configured over a wider frequency band between the first reference signal and the third reference signal is allocated a transmission power with a higher priority.

For example, based on that a carrier with a highest priority among the plurality of carriers configured for the first reference signal is higher than a carrier with a highest priority among a plurality of carriers configured for the third reference signal, the first reference signal may be allocated the transmission power with a higher priority than the third reference signal.

In one example, the wireless communication device may be a UE, and the first reference signal may be an SRS for positioning.

In another example, the wireless communication device may be a BS, and the plurality of reference signals may be downlink reference signals.

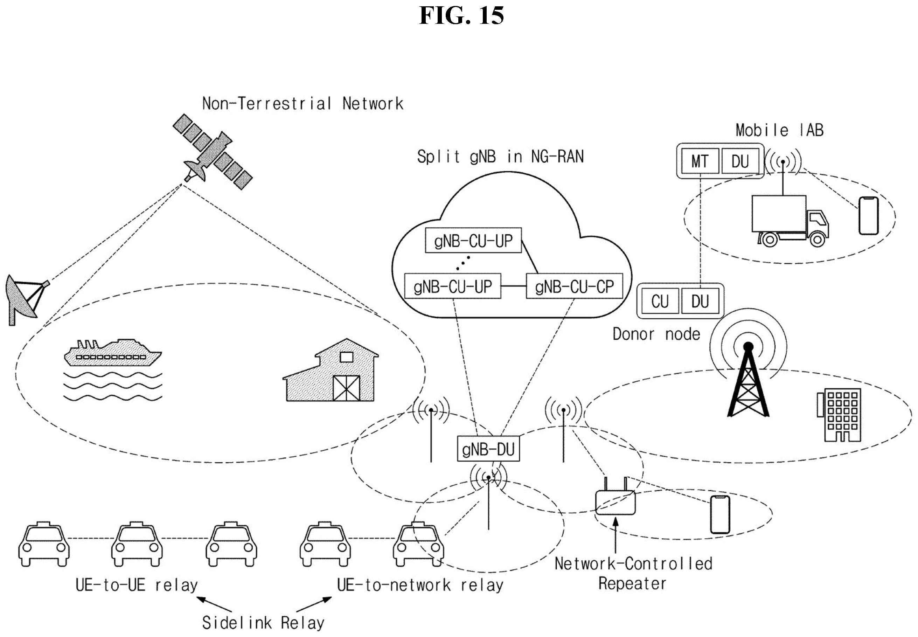

FIG. 15 illustrates a flexible network topology to which some examples of the present disclosure are applicable.

To compensate for incomplete network coverage areas, a network topology configured with a split radio access network (RAN) in a more flexible and resilient manner may be considered. To this end, various nodes such as an IAB node, a relay, and an RF repeater as illustrated in the example of FIG. 15 may be applied, and a non-terrestrial network (NTN) may also be integrated. For example, an IAB node may correspond to a node providing a wireless backhaul. For example, a relay may refer to an intermediate point, and a sidelink relay, which is a relay as which a UE functions, may collectively refer to a UE-to-network (U2N) relay and a UE-to-UE (U2U) relay. For example, an RF repeater may correspond to a node that performs simple signal amplification and forwarding, and a network-controlled repeater may adjust a transmission/-reception configuration based on information provided from a network, in addition to signal amplification and forwarding. For example, an NTN node may correspond to a satellite or aircraft providing NTN coverage, which is difficult for a terrestrial network to provide. In addition to these examples, various intermediate points may be introduced to improve the network topology.

Referring to FIG. 1, a split RAN may support division of a gNB into one centralized unit (CU) and one or more distributed units (DUs). The CU and the DUs may correspond to logical units. The CU may be further divided into a control plane (CP) part and one or more user plane (UP) parts. Since a CP-UP failure affects not only a CU-UP but also a DU, various intermediate points may be introduced to compensate for the failure.

An intermediate point may correspond to a UE or a gNB depending on its relative relationship with other nodes. For example, an IAB node may include a mobile-termination (MT) part and a DU. The MT may connect the IAB node to a donor node. The DU of the IAB node may serve other UEs or connect to another IAB node to provide a multi-hop wireless backhaul to a UE. That is, the IAB node may correspond to a gNB in its relative relationship with a user-side node, and to a UE in its relative relationship with a network-side node.

In some examples of the present disclosure, the description of a UE may apply equally not only to a user-side endpoint but also to an intermediate point that corresponds to a UE in its relative relationship with a network-side endpoint. Similarly, in some examples of the present disclosure, the description of a BS may apply equally not only to a network-side endpoint but also to an intermediate point that corresponds to a BS in its relative relationship with a user-side endpoint. However, in most cases where there is no additional description of operations involving three and more entities, a communication entity in the present disclosure is briefly described using the term UE and/or BS (or first node and/or second node), which is interpreted to include/replace any endpoint or any intermediate point according to its relationship with other nodes.

That is, to simplify the description in some examples of the present disclosure, an operation entity may be referred to as a BS and/or a UE (or a first node and/or a second node). Further, the term BS and/or UE (or first node and/or second node) may be interpreted/replaced as in the following examples: for example, a BS (or first node) and a UE (or second node) may respectively correspond to a first endpoint and a second endpoint; an endpoint and an intermediate point; an intermediate point and an endpoint; or a first intermediate point and a second intermediate point.

In the present disclosure, there may be no intermediate points or one or more intermediate points between a BS and a UE. When an intermediate point exists, it may correspond to an IAB node/relay/RF repeater/NTN node, or a node supporting other functions. The intermediate point may be a fixed node or a mobile (unfixed) node in terms of location.

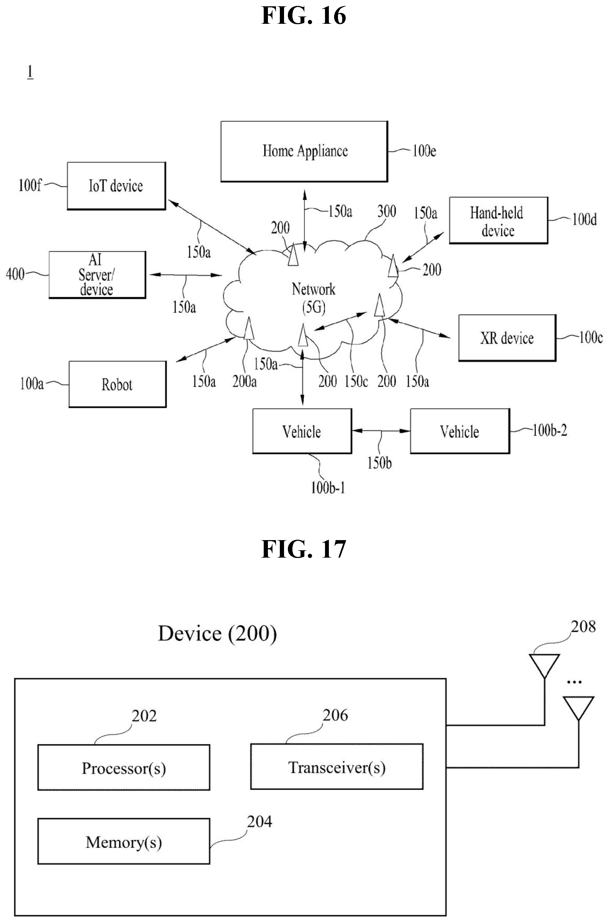

A communication system 1 of FIG. 16 applied to the present disclosure, includes a wireless device, a BS, and a network. A wireless device refers to a device that performs communication using wireless access technologies (e.g., LTE, LTE-A, LTE-A pro, NR, 5G, 5G-A, and 6G), and may be referred to as a communication/wireless/5G device. The wireless device may include, but is not limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 100g. For example, the vehicle may include a vehicle equipped with wireless communication functionality, an autonomous driving vehicle, a vehicle capable of performing inter-vehicle communication, and so on. The vehicles 100b-1 and 100b-2 may include an unmanned aerial vehicle (UAV) (e.g., drone). The XR device 100c includes an augmented reality (AR)virtual reality (VR)/mixed reality (MR) device, and may be implemented in the form of a head mounted device (HMD), a head-up display (HUD) equipped in a vehicle, a television, a smartphone, a computer, a wearable device, a home appliance, a digital signage, a vehicle, or a robot. The hand-held device 100d may include a smartphone, a smart pad, and a wearable device (e.g., a smartwatch, smart glasses, a computer (e.g., a laptop)). The home appliance 100e may include a TV, a refrigerator, a washing machine, and so on. The IoT device 100f may include a sensor, a smart meter, and so on. A wireless device 110 may correspond to a UE (or first node) or an intermediate point. A network device 120 may correspond to a BS (or second node) or another intermediate point. For example, the network device 120 may be implemented as the wireless device 110, and a specific wireless device 120a may operate as the network device 120 for another wireless device 110.

The wireless devices 100a to 100f may be connected to the network 130 via the BS 120. AI technology may be applied to the wireless devices 100a to 100f, and these devices may be connected to an AI server 100g via the network 130. The network 130 may be configured using a 3G, 4G (e.g., LTE), 5G (e.g., NR), or 6G network. The wireless devices 100a to 100f may communicate with each other via the BS 120/network 130, or they may communicate directly (e.g., sidelink communication) without intervention of the BS 120/network 130. For example, the vehicles 100b-1 and 100b-2 may perform direct communication (e.g., vehicle to vehicle (V2V)/vehicle to everything (V2X) communication). Additionally, the IoT device 100f (e.g., a sensor) may communicate directly with another IoT device 100f (e.g., a sensor) or other wireless devices 100a to 100f.

Wireless communication/connections 150a, 150b, and 150c may be established between the wireless devices 100a to 100f and the BS 120, and between BSs 120 themselves. The wireless communication/connections may be achieved through various wireless access technologies such as UL/DL communication 150a, sidelink communication 150b (or D2D communication), and inter-BS communication 150c (e.g., relay and integrated access backhaul (IAB)). Through the wireless communication/connections 150a, 150b, and 150c, wireless devices and BSs/wireless devices, and BSs may transmit/receive wireless signals to each other. For example, the wireless communication/connections 150a, 150b, and 150c may transmit/receive signals through various physical channels. To this end, based on various proposals of the present disclosure, at least some of a process for setting various configuration information for transmitting/receiving wireless signals, various signal processing processes (e.g., channel encoding/decoding, modulation/demodulation, resource mapping/demapping, and so on), and a resource allocation process may be performed.

FIG. 17 illustrates an example of a wireless device applicable to the present disclosure.

Referring to FIG. 3, a wireless device 200 may transmit and receive wireless signals through various wireless access technologies (e.g., LTE, LTE-A, LTE-A pro, NR, 5G, 5G-A, and 6G). The wireless device 200 may include at least one processor 202 and at least one memory 204, and further include at least one transceiver 206 and/or at least one antenna 208.

The processor 202 may be configured to control the memory 204 and/or the transceiver 206, and implement the descriptions, functions, procedures, proposals, methods, and/or flowcharts disclosed in the present disclosure. For example, the processor 202 may process information in the memory 204 to generate first information/signal, and then transmit a wireless signal including the first information/signal through the transceiver 206. Additionally, the processor 202 may receive a wireless signal including second information/signal through the transceiver 206, and then store information obtained by signal processing of the second information/signal in the memory 204. The memory 204 may be connected to the processor 202 and store various pieces of information related to the operation of the processor 202. For example, the memory 204 may store software code including instructions for performing some or all of processes controlled by the processor 202 or for performing the descriptions, functions, procedures, proposals, methods, and/or flowcharts disclosed in the present disclosure. Herein, the processor 202 and the memory 204 may be part of a communication modem/circuit/chip designed to implement wireless communication technology. The transceiver 206 may be connected to the processor 202 and transmit and/or receive wireless signals through the at least one antenna 208. The transceiver 206 may include a transmitter and/or a receiver. The transceiver 206 may be used interchangeably with a radio frequency (RF) unit. In the present disclosure, a wireless device may also refer to a communication modem/circuit/chip.

Hardware elements of the wireless device 200 will be described below in more detail. At least one protocol layer may be implemented by the at least one processor 202, to which the present disclosure is not limited. For example, the at least one processor 202 may implement at least one layer (e.g., functional layers such as physical (PHY), media access control (MAC), radio link control (RLC), packet data convergence protocol (PDCP), radio resource control (RRC), and service data adaptation protocol (SDAP)). The at least one processor 202 may generate at least one Protocol Data Unit (PDU) and/or at least one service data unit (SDU) according to the descriptions, functions, procedures, proposals, methods, and/or flowcharts disclosed in the present disclosure. The att least one processor 202 may generate messages, control information, data, or information according to the descriptions, functions, procedures, proposals, methods, and/or flowcharts disclosed in the present disclosure. The at least one processor 202 may generate a signal (e.g., baseband signal) including a PDU, an SDU, a message, control information, data, or information according to the functions, procedures, proposals, and/or methods disclosed in the present disclosure, and provide it to the at least one transceiver 206. The at least one processor 202 may receive a signal (e.g., baseband signal) from the at least one transceiver 206 and obtain a PDU, an SDU, a message, control information, data, or information according to the descriptions, functions, procedures, proposals, methods, and/or flowcharts disclosed in the present disclosure.

The at least one processor 202 may be referred to as a controller, microcontroller, microprocessor, or microcomputer. The at least one processor 202 may be implemented by hardware, firmware, software, or a combination thereof. In an example, at least one application specific integrated circuit (ASIC), at least one digital signal processor (DSP), at least one digital signal processing device (DSPD), at least one programmable logic device (PLD), or at least one field programmable gate array (FPGA) may be included in the at least one processor 202. The descriptions, functions, procedures, proposals, methods, and/or flowcharts disclosed in the present disclosure may be implemented using firmware or software, and the firmware or software may be implemented to include a module, a procedure, a function, and so on. The firmware or software configured to perform the descriptions, functions, procedures, proposals, methods, and/or flowcharts disclosed in the present disclosure may be included in the at least one processor 202 or stored in the at least one memory 204 and driven by the at least one processor 202. The descriptions, functions, procedures, proposals, methods, and/or flowcharts disclosed in the present disclosure may be implemented using firmware or software in the form of code, an instruction, and/or a set of instructions.

The at least one memory 204 may be connected to the at least one processor 202 and store various types of data, signals, messages, information, programs, code, instructions, and/or commands. The at least one memory 204 may include read only memory (ROM), random access memory (RAM), erasable programmable read only memory (EPROM), flash memory, a hard drive, a register, a cache memory, a computer-readable storage medium, and/or a combination thereof. The at least one memory 204 may be located inside and/or outside the at least one processor 202. Additionally, the at least one memory 204 may be connected to the at least one processor 202 through various technologies such as wired or wireless connections.

The at least one transceiver 206 may transmit user data, control information, a wireless signal/channel, and so on mentioned in the methods and/or flowcharts of the present disclosure to at least one other device. The at least one transceiver 206 may receive user data, control information, a wireless signal/channel, and so on mentioned in the descriptions, functions, procedures, proposals, methods, and/or flowcharts disclosed in the present disclosure from at least one other device. For example, the at least one transceiver 206 may be connected to the at least one processor 202 and transmit and receive wireless signals. For example, the at least one processor 202 may control the at least one transceiver 206 to transmit user data, control information, or a wireless signal to at least one other device. Additionally, the at least one processor 202 may control the at least one transceiver 206 to receive user data, control information, or a wireless signal from at least one other device. Further, the at least one transceiver 206 may be connected to the at least one antenna 208, and configured to transmit and receive user data, control information, a wireless signal/channel, and so on mentioned in the descriptions, functions, procedures, proposals, methods, and/or flowcharts disclosed in the present disclosure through the at least one antenna 208. In the present disclosure, at least one antenna may be a plurality of physical antennas or a plurality of logical antennas (e.g., antenna ports). The at least one transceiver 206 may convert a received wireless signal/channel from an RF band signal to a baseband signal to process the received user data, control information, wireless signal/channel, and so on, using the at least one processor 202. The at least one transceiver 206 may convert user data, control information, a wireless signal/channel, and so on processed using the at least one processor 202 from a baseband signal to an RF band signal. To this end, the at least one transceiver 206 may include an (analog) oscillator and/or filter.

The components of the wireless device described with reference to FIG. 17 may be referred to by different terms from a functional perspective. For example, the processor 202 may be referred to as a controller, the transceiver 206 as a communication unit, and the memory 204 as a storage unit. In some cases, the communication unit may be used to mean including at least part of the processor 202 and the transceiver 206.

The structure of the wireless device described with reference to FIG. 17 may be understood as the structure of at least part of various devices. For example, the structure of the wireless device illustrated in FIG. 17 may be at least part of the various devices described with reference to FIG. 16 (e.g., the robot 100a, the vehicles 100b-1 and 100b-2, the XR device 100c, the hand-held device 100d, the home appliance 100e, the IoT device 100f, and the AI device/server 100g). Further, according to various embodiments, the device may further include other components in addition to the components illustrated in FIG. 3.

For example, the device may be a portable device such as a smartphone, smart pad, wearable device (e.g., smartwatch and smart glasses), or portable computer (e.g., laptop). In this case, the device may further include at least one of a power supply unit that supplies power and includes a wired/wireless charging circuit, a battery, and so on, an interface unit that includes at least one port (e.g., audio input/output port and video input/output port) for connection to other devices, and an input/output unit for inputting and outputting video information/signals, audio information/signals, data, and/or information input from a user.

For example, the device may be a mobile device such as a mobile robot, vehicle, train, unmanned aerial vehicle (UAV), vessel, and so on. In this case, the device may further include at least one of a driving unit that includes at least one of an engine, motor, powertrain, wheel, brake, or steering system of the device, a power supply unit that supplies power and includes a wired/wireless charging circuit, a battery, and so on, a sensor unit that senses status information, environmental information, and user information of the device or its surroundings, an autonomous driving unit that performs functions such as path maintenance, speed control, and destination setting, and a positioning unit that obtains mobile object position information through the global positioning system (GPS) and various sensors.

For example, the device may be an XR device such as an HMD, a head-up display (HUD) equipped in a vehicle, a television, a smartphone, a computer, a wearable device, a home appliance, digital signage, a vehicle, or a robot. In this case, the device may further include at least one of a power supply unit that supplies power and includes a wired/wireless charging circuit, a battery, and so on, an input/output unit that obtains control information, data, and so on from an external source and outputs a generated XR object, and a sensor unit that senses status information, environmental information, and user information of the device or its surroundings.

For example, the device may be a robot categorized as industrial, medical, home, military, and so on, depending on its purpose or field of use. In this case, the device may further include at least one of a sensor unit that senses status information, environmental information, and user information of the device or its surroundings, and a driving unit that performs various physical actions such as moving robot joints.

For example, the device may be an AI device such as a TV, projector, smartphone, PC, laptop, digital broadcasting terminal, tablet PC, wearable device, set-top box (STB), radio, washing machine, refrigerator, digital signage, robot, or vehicle. In this case, the device may further include at least one of an input unit that obtains various types of data from an external source, an output unit that generates an output related to vision, hearing, or touch, a sensor unit that senses status information, environmental information, and user information of the device or its surroundings, and a training unit that trains a model including an artificial neural network using training data.

The structure of the wireless device illustrated in FIG. 17 may be understood as part of a Radio Access Network (RAN) node (e.g., BS, DU, RU, RR, and so on). That is, the device illustrated in FIG. VI may be a RAN node. In this case, the device may further include a wired transceiver for front haul and/or back haul communication. However, when front haul and/or back haul communication is based on wireless communication, the at least one transceiver 206 illustrated in FIG. 17 may be used for front haul and/or back haul communication, and a wired transceiver may not be included.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of transmitting signals by a wireless communication device, the method comprising:

   determining a transmission power for each of a plurality of reference signals comprising a first reference signal and a second reference signal; and
   transmitting at least one of the plurality of reference signals based on the determined transmission power,
   wherein based on that bandwidth (BW) aggregation over a plurality of carriers is configured for the first reference signal, and that the first reference signal at least partially overlaps in a time domain with the second reference signal, a transmission power is allocated to the BW-aggregated first reference signal is allocated a transmission power with a higher priority than the second reference signal.

2. The method of claim 1, wherein, based on a sum of a power required for the first reference signal and a power required for the second reference signal being greater than a maximum transmission power of the wireless communication device, the first reference signal is allocated the transmission power with the higher priority within a range of the maximum transmission power.

3. The method of claim 2, wherein a reduced transmission power is allocated to the second reference signal.

4. The method of claim 1, wherein the plurality of reference signals further comprise a third reference signal to which the BW aggregation configured, and
   wherein, based on that the first reference signal at least partially overlaps in the time domain with the third reference signal, a reference signal configured over more carriers between the first reference signal and the third reference signal is allocated a transmission power with a higher priority.

5. The method of claim 1, wherein the plurality of reference signals further comprise a third reference signal to which the BW aggregation configured, and
   wherein, based on that the first reference signal at least partially overlaps in the time domain with the third reference signal, a reference signal configured over a wider frequency band between the first reference signal and the third reference signal is allocated a transmission power with a higher priority.

6. The method of claim 1, wherein the plurality of reference signals further comprise a third reference signal to which the BW aggregation configured, and
   wherein, based on that a carrier with a highest priority among the plurality of carriers configured for the first reference signal is higher than a carrier with a highest priority among a plurality of carriers configured for the third reference signal, the first reference signal is allocated the transmission power with a higher priority than the third reference signal.

7. The method of claim 1, wherein the wireless communication device is a user equipment (UE),
   wherein the first reference signal is a sounding reference signal (SRS) for positioning.

8. The method of claim 1, wherein the wireless communication device is a base station, and
   wherein the plurality of reference signals are downlink reference signals.

9. A recording medium storing instructions that, when executed by a processor, cause the processor to perform operations, the operations comprising:

   determining a transmission power for each of a plurality of reference signals comprising a first reference signal and a second reference signal; and
   transmitting at least one of the plurality of reference signals based on the determined transmission power,
   wherein based on that bandwidth (BW) aggregation over a plurality of carriers is configured for the first reference signal, and that the first reference signal at least partially overlaps in a time domain with the second reference signal, a transmission power is allocated to the BW-aggregated first reference signal is allocated a transmission power with a higher priority than the second reference signal.

10. A wireless communication device comprising:

a memory configured to store instructions; and
a processor configured to execute the instructions to perform operations,
wherein the operations of the processor comprise:

determining a transmission power for each of a plurality of reference signals comprising a first reference signal and a second reference signal; and
transmitting at least one of the plurality of reference signals based on the determined transmission power, wherein based on that bandwidth (BW) aggregation over a plurality of carriers is configured for the first reference signal, and that the first reference signal at least partially overlaps in a time domain with the second reference signal, a transmission power is allocated to the BW-aggregated first reference signal is allocated a transmission power with a higher priority than the second reference signal

11. The wireless communication device of claim 10, further comprising:

a transceiver,
wherein the wireless communication device is a user equipment (UE) or a base station.

12. The wireless communication device of claim 10, wherein the wireless communication device is a processing device configured to control a user equipment (UE) or a base station in a wireless communication system.

13. The wireless communication device of claim 10, wherein, based on a sum of a power required for the first reference signal and a power required for the second reference signal being greater than a maximum transmission power of the wireless communication device, the first reference signal is allocated the transmission power with the higher priority within a range of the maximum transmission power.

14. The wireless communication device of claim 13, wherein a reduced transmission power is allocated to the second reference signal.

# FIG. 1

# FIG. 2

# FIG. 3

transmit RTT measurement request

transmit RTT measurement signal at $t_0$

TOA measurement $t_3$

RTT$=t_3-t_0-[t_2-t_1]$

Initiating Device

Responding Device

1301

receive RTT measurement request

TOA measurement $t_1$

1303

1305

transmit RTT measurement signal at $t_2$

transmit $[t_2-t_1]$

1307

(a)

$d_1$

BS$_1$

$d_2$

BS$_2$

$d_3$

BS$_3$

Target Device Location

(b)

# FIG. 4

# FIG. 5

# FIG. 6

(a)

(b)

# FIG. 7

Identify Sensing Capability 705

Configure Sensing Operation 710

Perform Sensing Operation 715

# FIG. 8

Report UE capability — FC101

Receive configuration information — FC102

Receive BW-agg-SRS-p scheduling — FC104

— FC103

Receive other signal/channel scheduling — FC105

Transmission power allocation — FC106

Transmit BW-agg-SRS-p and/or other signal channel — FC107

# FIG. 9

Receive UE capability —FC201

Receive configuration information —FC202

Indicate BW-agg-SRS-p scheduling —FC204

—FC203

Indicate other signal/channel scheduling —FC205

Receive and measuring BW-agg-SRS-p and/or transmitting other signal channel —FC206

**FIG. 10**

FC403

time

BW aggregation

FC401    FC402    FC404

frequency

Carrier 1    Carrier 2    Carrier 3

**FIG. 11**

FC504

time

BW aggregation

FC501    FC502    FC503  FC505

frequency

Carrier 1    Carrier 2    Carrier 3

**FIG. 12**

EP 4 761 386 A1

# FIG. 13

## FIG. 14

Determine transmission power of
each of plurality of reference signals — 1405

Transmit at least one of plurality of
reference signals based on
determined transmission power — 1510

# FIG. 15

Non-Terrestrial Network

Split gNB in NG-RAN

Mobile IAB

MT | DU

gNB-CU-UP

gNB-CU-UP — gNB-CU-CP

CU | DU

Donor node

gNB-DU

UE-to-UE relay

UE-to-network relay

Network-Controlled Repeater

Sidelink Relay

EP 4 761 386 A1

# FIG. 16

# FIG. 17

## INTERNATIONAL SEARCH REPORT

| International application No. |
|---|
| **PCT/KR2024/009654** |

| A. | CLASSIFICATION OF SUBJECT MATTER |
|---|---|

**H04W 52/32**(2009.01)i; **H04W 52/14**(2009.01)i; **H04W 52/28**(2009.01)i; **H04W 52/34**(2009.01)i; **H04W 64/00**(2009.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 52/32(2009.01); H04W 24/08(2009.01); H04W 52/14(2009.01); H04W 52/24(2009.01); H04W 72/56(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 대역폭(BW), 집성(aggregation), 전력(power), 중첩(overlap), 우선순위(priority)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2019-0064673 A (INTERDIGITAL PATENT HOLDINGS, INC.) 10 June 2019 (2019-06-10) See paragraph [0065]; and claims 1-3, 6, 27 and 29. | 1-3,9-14 |
| Y | | 4-8 |
| Y | KR 10-2021-0138016 A (QUALCOMM INCORPORATED) 18 November 2021 (2021-11-18) See paragraphs [0023]-[0024]. | 4 |
| Y | CMCC. Discussion on BW aggregation for positioning measurements. R1-2305103, 3GPP TSG RAN WG1 Meeting #113. Incheon, Korea. 15 May 2023. See sections 2.1-2.2 and 3.3. | 5-8 |
| A | XIAOMI. Bandwidth aggregation for positioning measurement. R1-2304911, 3GPP TSG RAN WG1 Meeting #113. Incheon, Korea. 15 May 2023. See sections 3-3.4. | 1-14 |
| A | KR 10-2022-0152267 A (LG ELECTRONICS INC.) 15 November 2022 (2022-11-15) See paragraphs [0290]-[0402]. | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 October 2024** | **25 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/009654**

| Patent document cited in search report | | | Publication date (day/month/year) | Patent family member(s) | | | Publication date (day/month/year) |
|---|---|---|---|---|---|---|---|
| KR | 10-2019-0064673 | A | 10 June 2019 | CN | 103931242 | A | 16 July 2014 |
| | | | | CN | 108834205 | A | 16 November 2018 |
| | | | | CN | 109327893 | A | 12 February 2019 |
| | | | | CN | 114245444 | A | 25 March 2022 |
| | | | | EP | 2774426 | A1 | 10 September 2014 |
| | | | | EP | 3525523 | A1 | 14 August 2019 |
| | | | | JP | 2014-535245 | A | 25 December 2014 |
| | | | | JP | 2016-027707 | A | 18 February 2016 |
| | | | | JP | 2017-200247 | A | 02 November 2017 |
| | | | | JP | 2020-048230 | A | 26 March 2020 |
| | | | | JP | 2022-031907 | A | 22 February 2022 |
| | | | | KR | 10-2014-0091733 | A | 22 July 2014 |
| | | | | TW | 201334431 | A | 16 August 2013 |
| | | | | TW | 201810966 | A | 16 March 2018 |
| | | | | TW | 201927033 | A | 01 July 2019 |
| | | | | US | 2013-0114505 | A1 | 09 May 2013 |
| | | | | US | 2015-0043413 | A1 | 12 February 2015 |
| | | | | US | 2017-0070960 | A1 | 09 March 2017 |
| | | | | US | 2019-0110255 | A1 | 11 April 2019 |
| | | | | US | 2021-0099960 | A1 | 01 April 2021 |
| | | | | WO | 2013-067430 | A1 | 10 May 2013 |
| KR | 10-2021-0138016 | A | 18 November 2021 | BR | 112021017736 | A2 | 16 November 2021 |
| | | | | CN | 113557786 | A | 26 October 2021 |
| | | | | EP | 3942892 | A1 | 26 January 2022 |
| | | | | KR | 10-2023-0113667 | A | 31 July 2023 |
| | | | | SG | 11202109046 | A | 28 October 2021 |
| | | | | US | 2020-0305201 | A1 | 24 September 2020 |
| | | | | US | 2022-0312491 | A1 | 29 September 2022 |
| | | | | WO | 2020-190484 | A1 | 24 September 2020 |
| KR | 10-2022-0152267 | A | 15 November 2022 | US | 2023-0164702 | A1 | 25 May 2023 |
| | | | | WO | 2021-206499 | A1 | 14 October 2021 |

Form PCT/ISA/210 (patent family annex) (July 2022)